# EUROPÄISCHE PATENTSCHRIFT

(11) **EP 3 307 123 B1**
(45) Veröffentlichungstag und Bekanntmachung des Hinweises auf die Patenterteilung: **07.08.2019**
(21) Anmeldenummer: 16732968.9
(22) Anmeldetag: 10.06.2016
(51) Int. Cl.: A47J 43/07, A47J 43/046, B02C 18/12, B02C 18/18, B02C 23/02, B02C 18/22

(54) **MESSERMÜHLE**
BLADE MILL
BROYEUR À LAME

(30) Priorität: 11.06.2015 DE 102015109335; 11.06.2015 DE 102015109336; 11.06.2015 DE 102015109338
(43) Veröffentlichungstag der Anmeldung: 18.04.2018
(73) Patentinhaber: Fritsch GmbH, 55743 Idar-Oberstein (DE)
(72) Erfinder: MUTTER, Wolfgang, 66892 Bruchmühlbach (DE); BÄR, Gerhard, 66557 Uchtelfangen (DE); MÜLLER, Manfred, 66386 St. Ingbert (DE)
(74) Vertreter: Blumbach · Zinngrebe Patentanwälte PartG mbB
(86) Internationale Anmeldenummer: PCT/EP2016/063399
(87) Internationale Veröffentlichungsnummer: WO 2016/198671

(56) Entgegenhaltungen:
- DE-A1- 2 703 326
- JP-A- 2003 093 909
- US-A- 4 362 277

## Beschreibung

### Gebiet der Erfindung

Die Erfindung betrifft eine Messermühle mit einem Komprimierer zum Komprimieren des zu zerkleinernden Gutes vor, während und/oder nach der Zerkleinerung.

### Hintergrund der Erfindung

Die JP2003093909 zeigt in Fig. 2 eine Abfallbehandlungsanlage 1 mit einem ersten Raum 12, einem zweiten Raum 16 und einem dritten Raum 33. Abfall 10 wird in dem Zerkleinerungsbehälter 14 zwischen einer Drückerfußplatte 35, welche mit der Eigenmasse auf den angehäuften Abfall drückt, und einem auf einer durch einen Motor 44 angetriebene Zerkleinerungsscheibe 46 angeordneten ersten Messerteil 49 zerkleinert und im Sterilisationstank 18 hitzesterilisiert. Der dritte Raum 33 dient zum weiteren Rühren und Hitzesterilisieren. Innerhalb des Zerkleinerungsbehälters 14 befindet sich eine scheibenartige Drückerfußplatte 35, die in den betreffenden Zylinder passt, um ein freies Auf- und Absteigen in Richtung des zylindrischen Schaftkerns zu ermöglichen. Die dargestellte Drückerfußplatte 35 ist so aufgehängt, dass der Draht 37, der mit den Antriebsmitteln 36, beispielsweise einem Luftzylinder, verbunden ist, mit dem Gewicht abnimmt, und wird durch die vorgenannten Antriebsmittel 36 angehoben.

Messermühlen für den Laborbetrieb sind typischerweise als Tischgeräte und teilweise ähnlich wie sogenannte Küchenmixer aufgebaut. Sie weisen ein Umgehäuse auf, in welchem der Antriebsmotor und alle übrigen Teile untergebracht sind. Innerhalb des Umgehäuses befindet sich über dem Antriebsmotor ein Zerkleinerungsbehälter mit einem zentralen horizontal rotierenden Messer, wobei die Antriebswelle des Motors vertikal durch eine zentrale Öffnung in dem Behälterboden nach oben in den Zerkleinerungsbehälter ragt und mit dem Messer gekoppelt ist. Das Zerkleinerungsgut wird in den Zerkleinerungsbehälter, zumeist aus Kunststoff, Glas oder Edelstahl gegeben und anschließend wird das Messer auf eine hohe Umdrehungsgeschwindigkeit, z.B. bis zu 10.000 U/min beschleunigt. Die DE 10 2012 010 064 A1 beschreibt eine universelle Zerkleinerungsmühle, welche unter anderem als solche Messermühle betrieben werden kann.

Messermühlen werden im Labor typischerweise zum Zerkleinern und Homogenisieren organischer Proben verwendet, z.B. um diese anschließend zu analysieren. Die Proben sind zumeist weich bis mittelhart. Messermühlen eignen sich insbesondere für ölhaltige, feuchte, aber auch faserige und trockene Proben und sind daher auch für Lebensmittel wie z.B. Fleisch, Gemüse, Salat, Käse, Wurst, Backwaren etc. geeignet,

Insbesondere leichte, feuchte und/oder ölhaltigen Proben neigen dazu, von dem Messer aufgewirbelt zu werden und an den Wänden des Zerkleinerungsbehälters hängen zu bleiben, was die Effektivität und Qualität der Zerkleinerung bzw. Homogenisierung beeinträchtigen kann. Ferner verlieren viele Proben beim Zerkleinern stark an Volumen. (vgl. z.B. Wikipedia: "Messermühle").

Die EP 0 906 741 A1 beschreibt eine Zerkleinerungsvorrichtung mit einem als Deckel ausgebildeten Kolben, welcher eine große Masse besitzt, um aufgrund seines Eigengewichts kontinuierlich in den Behälter einzusinken. Solche Deckel werden auch als sogenannte Schwerkraftdeckel bezeichnet.

Schwerkraftdeckel haben ersichtlich den Nachteil, dass sie prinzipbedingt ein hohes Gewicht aufweisen müssen und daher die Handhabung durch den Benutzer möglicherweise erschwert wird. Trotzdem kann der Schwerkraftdeckel beim Zerkleinerungsvorgang durch das Zerkleinerungsgut hoch gedrückt werden. Ferner ist die Größe der Kraft die der Schwerkraftdeckel auf das Zerkleinerungsgut ausübt, nicht veränderbar. Darüber hinaus komprimiert ein Schwerkraftdeckel das Zerkleinerungsgut bereits bevor die Messermühle gestartet wird. Mehr noch, ist die Wirkung des Schwerkraftdeckels auf das Zerkleinerungsgut vor, während und nach dem Zerkleinerungsprozess in keiner Weise vom Benutzer beeinflussbar. Ferner bedingt ein Schwerkraftdeckel bestimmte Anforderungen an die äußere Form, andernfalls könnte der Schwerkraftdeckel eventuell verkanten und steckenbleiben.

Weiter nachteilig ist, dass bisherige Messermühlen ggf. nur unzureichend für temperaturempfindliches Zerkleinerungsgut geeignet sind.

Weiter nachteilig an bisher bekannten Messermühlen ist, dass beim Zerkleinerungsvorgang aus dem Zerkleinerungsgut austretende Flüssigkeit in den Bereich der Antriebswelle gelangen kann, was die Lebensdauer beeinträchtigen bzw. eine aufwändige Reinigung nach sich ziehen kann, bei der unter Umständen Teile der Messermühle demontiert werden müssen.

Ebenfalls nachteilig ist, dass die Messer und ggf. weitere Bestandteile bekannter Messermühlen teilweise schwierig zu reinigen sind.

### Allgemeine Beschreibung der Erfindung

Die Erfindung hat sich daher die Aufgabe gestellt, eine Messermühle bereit zu stellen, welche die vorstehend beschriebenen Nachteile zumindest teilweise überwindet oder mindert.

Ein weiterer Aspekt der Aufgabe der Erfindung ist es, eine Messermühle bereit zu stellen, welche flexibel in Bezug auf die Betriebsbedingungen, komfortabel und fehlersicher in der Benutzung ist.

Ein besonderer Aspekt der Aufgabe der Erfindung ist es, eine Messermühle bereit zu stellen, welche eine Verbesserung des Zerkleinerungsprozesses, insbesondere der Komprimierung des Zerkleinerungsgutes vor, während und nach dem Zerkleinerungsprozess ermöglicht.

Ein weiterer Aspekt der Aufgabe der Erfindung ist es, eine Messermühle bereit zu stellen, welche die Verschmutzung bestimmter konstruktiver Bauteile der Messermühle verhindert oder zumindest mindert und die Reinigung der Messermühle, und insbesondere des Messers erleichtert.

Die Aufgabe der Erfindung wird durch den Gegenstand der unabhängigen Ansprüche gelöst. Vorteilhafte Weiterbildungen der Erfindung sind in den Unteransprüchen definiert.

### Schubmechanismus

Gemäß einem Aspekt der Erfindung wird eine Messermühle bereitgestellt, die einen Zerkleinerungsbehälter mit einem Behälterboden und einer äußeren Ringwandung zum Aufnehmen des zu zerkleinernden Gutes, kurz des Zerkleinerungsgutes, aufweist. Es handelt sich hierbei insbesondere um eine Messermühle im Labormaßstab, die demnach auch als Labor-Messermühle bezeichnet werden kann. In dem Zerkleinerungsbehälter rotiert horizontal das Messer der Messermühle und zwar unmittelbar oberhalb des Behälterbodens. D.h. die Schneidklingen des Messers rotieren in einer oder mehreren horizontalen Ebenen und die Rotationsachse des Messers verläuft vertikal. Unter dem Behälterboden und damit auch unterhalb des Messers ist ein Antriebsmotor zum Antreiben des Messers angeordnet. In dem Behälterboden befindet sich vorzugsweise eine zentrale Öffnung, durch welche die Antriebswelle des Antriebsmotors in den Zerkleinerungsbehälter ragt und dort mit dem insbesondere als Messerzylinder ausgebildeten Messer gekoppelt ist. Bevorzugt weist der Zerkleinerungsbehälter hierzu eine zentrische mit dem Behälterboden einstückig ausgebildete sich vertikal nach oben erstreckende Bodenhülse auf, in welcher die Antriebswelle verläuft und über welche der Messerzylinder stülpbar ist, so dass der von dem Zerkleinerungsgut in dem Zerkleinerungsbehälter einnehmbare Arbeitsraum zwischen der vertikalen Bodenhülse bzw. dem Messerzylinder und der äußeren Ringwandung des Zerkleinerungsbehälters ringförmig ausgebildet ist.

In dem Zerkleinerungsbehälter ist ein vertikal verschiebbarer Komprimierer zum Komprimieren des Zerkleinerungsgutes in dem Zerkleinerungsbehälter angeordnet. Der Komprimierer wird insbesondere während des Zerkleinerungsprozesses von oben auf den Behälterboden und das Messer zu in den Zerkleinerungsbehälter eingeschoben, also abgesenkt, um während des Zerkleinerungsvorgangs den Abstand zwischen einerseits dem Komprimierer und andererseits dem Behälterboden sowie dem Messer zu verringern und dabei den von dem Zerkleinerungsgut zwischen dem Komprimierer und dem Messer eingenommenen Arbeitsraum in dem Zerkleinerungsbehälter zu verkleinern. Der Komprimierer kann gleichzeitig auch den oberen Deckel des Zerkleinerungsbehälters bilden, was jedoch nicht zwingend ist. Mit anderen Worten sind der Antriebsmotor und der Komprimierer axial auf gegenüberliegenden Seiten des Messers angeordnet, was konstruktiv Vorteile gegenüber Messermühlen hat, bei welchen der Motor oberhalb des Messers angeordnet ist.

Der Komprimierer kann auch vor und/oder nach dem Zerkleinerungsprozess bewegt werden, wenn dies gewünscht wird.

Die Messermühle umfasst ferner einen Schubmechanismus, welcher den Komprimierer auf das Messer zu in den Zerkleinerungsbehälter einschiebt, indem der Komprimierer von dem Schubmechanismus mit einer vordefinierten, schwerkraftunabhängigen, axialen Schubkraft beaufschlagt wird. Die schwerkraftunabhängige Schubkraft ist insbesondere größer als die durch das Eigengewicht des Komprimierers bewirkte Schwerkraft.

Hieraus ergeben sich eine Mehrzahl von Vorteilen.

Zunächst kann der Komprimierer leicht sein, da es, anders als bei dem in der EP 0 906 741 A1 beschriebenen Kolben auf sein Eigengewicht nicht ankommt. Dadurch ist der Komprimierer Material sparend und z.B. aus Kunststoff kostengünstig herstellbar. Ferner ist die Form des Komprimierers an manchen Stellen freier designbar.

Ferner kann die Schubkraft unabhängig vom Einsetzen des Komprimierers in den Zerkleinerungsbehälter vom Benutzer gesteuert werden. Dies ermöglicht das Starten der Komprimierung zeitversetzt zum Einsetzen des Komprimierers in den Zerkleinerungsbehälter, z.B. erst nach dem Schließen des Umgehäuses, insbesondere erst nach dem Starten des Antriebsmotors und damit des Zerkleinerungsprozesses, also zu einem vom Benutzer frei wählbaren Zeitpunkt. Darüber hinaus kann der Schubmechanismus auch zu einem vom Benutzer frei wählbaren Zeitpunkt und/oder an einer unteren Endstellung mit der Kraftbeaufschlagung auf den Komprimierer wieder stoppen, wenn dies gewünscht ist. Es ist auch möglich, dass die Schubkraft während des Zerkleinerungsprozesses, z.B. wegabhängig und/oder zeitabhängig verändert wird, entweder automatisch oder durch Benutzereingriff. Insgesamt ist die Messermühle hinsichtlich der Wirkungsweise des Komprimierers flexibel auslegbar und steuerbar.

Ferner ist ein solcher Komprimierer vom Benutzer einfach zu handhaben und zu reinigen. Er kann unter anderem ein geringes Gewicht aufweisen und leicht zu reinigen sein, z.B. spülmaschinengeeignet ausgebildet sein.

Der Komprimierer kann auch in einfacher Weise, z.B. mit einer Magnethalterung an den Schubmechanismus gekoppelt werden.

Vorzugsweise umfasst die Messermühle also ein Umgehäuse, insbesondere mit einem auf einem Tisch aufstellbaren Grundgehäuse und einem öffenbaren, z.B. auf und zu schwenkbaren Umgehäusedeckel. Es handelt sich bei der Messermühle demnach um ein Tischgerät. Zumindest der Zerkleinerungsbehälter, der Komprimierer und die Bestandteile des Schubmechanismus sind in dem Umgehäuse, vorzugsweise unter dem als Haube ausgebildeten Umgehäusedeckel untergebracht, wenn dieser geschlossen ist. Der Schubmechanismus kann sich innen gegen das Umgehäuse abstützen, insbesondere vertikal gegen den öffenbaren Umgehäusedeckel, um ein Gegenlager für den Schubmechanismus und die Kraftbeaufschlagung auf den Komprimierer zu bilden. Dadurch ist in vorteilhafter Weise ein konstruktiv gut geeignetes Gegenlager für die Kraftbeaufschlagung auf den Komprimierer in Richtung des Messers und des Motors gegeben.

Die Messermühle umfasst weiter vorzugsweise ein vom Benutzer betätigbares Stellglied, insbesondere an einer Außenseite des Umgehäuses, vorzugsweise an der Außenseite des Umgehäusedeckels. Der Schubmechanismus weist vorzugsweise einen Rastmechanismus auf, mittels welchem der Schubmechanismus in verschiedenen Stellungen verrastet werden kann. Erst durch Betätigung des Stellgliedes durch den Benutzer wird die Verrastung des Schubmechanismus gelöst und die Beaufschlagung des Komprimierers mit der Schubkraft ausgelöst. Diese Auslösung der Schubkraft auf den Komprimierer kann in vorteilhafter Weise zu einem beliebigen, vom Benutzer frei wählbaren Zeitpunkt erfolgen, z.B. auch erst nach Beginn des Zerkleinerungsprozesses, d.h. nach Start des Antriebsmotors, wenn dies gewünscht wird. Der Benutzer kann die Schubkraft auch zu jedem beliebigen, frei wählbaren Zeitpunkt wieder stoppen, z.B. indem das Stellglied wieder zurück gestellt wird.

Mit anderen Worten weist der Schubmechanismus eine obere Nullstellung auf, in welcher noch keine Kraftbeaufschlagung auf den Komprimierer stattfindet. Der Schubmechanismus weist ferner eine untere Endstellung auf, in welcher das Einschieben des Komprimierers in den Zerkleinerungsbehälter endet. Bevorzugt weist der Schubmechanismus zumindest noch eine Zwischenstellung, vorzugsweise eine Mehrzahl von Zwischenstellungen, auf, welche ebenfalls von dem Benutzer an dem Stellglied ausgewählt werden können. Das Stellglied kann z.B. als Drehknopf ausgebildet sein. Durch eine Drehung des Drehknopfes von 0° bis 90°, z.B. in 15°-Schritten, wird der Komprimierer z.B. bis zur jeweils zugehörigen Zwischenstellung in den Zerkleinerungsbehälter eingeschoben und durch Drehung des Drehknopfes bis zur 90°-Stellung wird der Komprimierer weiter bis zur unteren Endstellung in den Zerkleinerungsbehälter eingeschoben, wobei der Komprimierer in der unteren Endstellung tiefer in den Zerkleinerungsbehälter eingeschoben ist als in der oder den Zwischenstellungen. Der Drehknopf kann hierzu in der Nullstellung (0°) und jeder der Zwischenstellungen (z.B. 15°, 30°, 45°, 60° und 75°) verrastet werden. Das Entrasten des Drehknopfes wird vorzugsweise durch axiales Herunterdrücken des Drehknopfes bewirkt.

Vorzugsweise umfasst der Schubmechanismus ein Federelement, welches den Komprimierer mit der Schubkraft in Form von Federkraft beaufschlagt, wobei durch die Entspannung des Federelements das Einschieben des Komprimierers von der oberen Nullstellung bis zu der Zwischenstellung bzw. bis zu der unteren Endstellung in den Zerkleinerungsbehälter bewirkt wird. Mit anderen Worten treibt das Federelement durch seine durch Vorspannung gespeicherte Federkraft den Komprimierer durch die Entspannung des Federelements in Richtung der Schneidklingen des Messers und in Richtung des Behälterbodens voran. Das Federelement kann hierzu z.B. eine oder mehrere um die Antriebsachse herum angeordnete Blattfedern umfassen. In vorteilhafter Weise übt das Federelement eine beim Einschieben des Komprimierers abfallende axiale Kraft auf den Komprimierer aus.

Gemäß einer bevorzugten Ausführungsform der Erfindung umfasst der Komprimierer eine den Schneidklingen des Messers zugewandte und auf das Zerkleinerungsgut wirkende horizontale Kompressionsscheibe und einen zentrischen Druckstempel. Die ringförmige Kompressionsscheibe wirkt wie ein sich in dem Zerkleinerungsbehälter auf die Schneidklingen des Messers zu bewegender Deckel. Der Schubmechanismus bzw. das Federelement weisen an ihrer dem Komprimierer zugewandten ersten Seite eine erste zentrale Druckplatte auf, und die erste zentrale Druckplatte beaufschlagt den zentralen Druckstempel des Komprimierers mit der Schubkraft bzw. der Federkraft des Federelements. Mit anderen Worten ist der Komprimierer stempelartig mit ringförmiger Kompressionsscheibe ausgebildet. In vorteilhafter Weise wird so ein gleichmäßiges Einschieben des Komprimierers gewährleistet und insbesondere kann ein Verkanten verhindert werden. Der Komprimierer braucht trotzdem nicht notwendigerweise eine äußere Ringwandung aufzuweisen, wobei das in Rahmen einer allgemeinen Ausgestaltung nicht ausgeschlossen sein soll.

Vorzugsweise umfasst der Schubmechanismus eine Federspanneinrichtung, welche das Federelement in der oberen Nullstellung und, sofern vorhanden, in den Zwischenstellungen mehr oder weniger gespannt hält. Erst durch Lösen der Verrastung und damit der Federspanneinrichtung wird die Federkraft des Federelements freigesetzt und erst dadurch die Beaufschlagung des Komprimierers mit der Schubkraft ausgelöst. Damit kann der Benutzer in vorteilhafter Weise den Zeitpunkt des Beginns der Kraftbeaufschlagung auf den Komprimierer frei wählen.

Bevorzugt ist das Stellglied als Drehknopf ausgebildet und die Federspanneinrichtung umfasst vorzugsweise eine Seilzugeinrichtung, welche an einem ersten Ende mit der ersten zentralen Druckplatte, d.h. mit dem unteren Ende des Federelements verbunden ist. Durch Lösen der Verrastung und nachfolgendes Drehen des Drehknopfes ist das Federelement mittels der Seilzugeinrichtung spannbar und/oder entspannbar. In vorteilhafter Weise kann mit dem Drehknopf, der z.B. konzentrisch zur Antriebswelle oben an der Außenseite des Umgehäusedeckels angeordnet ist, eine bequeme Bedienung und hinreichende Kraftübersetzung zum Spannen des Federelements per Hand durch den Benutzer gewährleistet werden.

Vorzugsweise umfasst der Schubmechanismus noch einen Federkraftverstärker - auch "Booster" genannt - mit einem vom Benutzer betätigbaren Kraftverstärker-Stellglied. Wenn der Benutzer das Kraftverstärker-Stellglied, z.B. in Form eines weiteren Drehknopfes, am Umgehäusedeckel betätigt, wird der Federkraftverstärker aktiviert und verändert, insbesondere vergrößert, die Stärke der auf den Komprimierer wirkenden Schubkraft. Somit sind in vorteilhafter Weise vom Benutzer zu einem frei wählbaren Zeitpunkt mehrere, zumindest zwei, vorzugsweise mehrere, ggf. stufenlos einstellbare, verschiedene auf den Komprimierer wirkende Krafteinstellungen einstellbar.

Ferner bevorzugt umfasst das Federelement an seiner der ersten Seite gegenüberliegenden zweiten Seite eine zweite zentrale Druckplatte. Mit anderen Worten sind die Federn, z.B. Blattfedern des Federelements zwischen der ersten und zweiten zentralen Druckplatte eingespannt. Das Kraftverstärker-Stellglied betätigt bevorzugt eine Hebelmechanik, mittels welcher das Federelement von oben nachkomprimiert wird, um die auf den Komprimierer wirkende Federkraft in jeder Stellung des Komprimierers beim Einschieben in den Zerkleinerungsbehälter erhöhen zu können, z.B. indem die Hebelmechanik die obere zweite zentrale Druckplatte kraftbeaufschlagt und nach unten verschiebt. Hiermit kann der Benutzer in vorteilhafter Weise die Federkraft in allen Stellungen des Komprimierers verändern, insbesondere erhöhen.

Es hat sich als vorteilhaft herausgestellt, wenn die in der entrasteten oberen Stellung des Komprimierers auf den Komprimierer wirkende Schubkraft im Bereich zwischen 8 N und 120 N höher ist als die durch die Gravitation auf den Komprimierer wirkende Kraft, wobei die Kraft Federbedingt in der oberen Nullstellung des Schubmechanismus größer ist als in der Zwischenstellung und der unteren Endstellung.

Insbesondere kann der Benutzer mit dem Federkraftverstärker also bei gleicher Stellung des Komprimierers zumindest zwei verschiedene auf den Komprimierer wirkende Schubkräfte einstellen.

Vorzugsweise ist das Messer hutartig mit einem hülsenförmigen Klingenhalter ausgebildet, an dessen Umfangswand eine oder mehrere Schneidklingen angeordnet sind. Der Zerkleinerungsbehälter weist im Boden eine zentrale Öffnung auf durch welche die Antriebswelle des Antriebsmotors in den hülsenförmigen Klingenhalter hineinragt, wobei die zentrale Öffnung bevorzugt von einer zentrischen vertikalen Bodenhülse umgeben ist, die sich vom Behälterboden nach oben in den Zerkleinerungsbehälter erstreckt, damit die sich in der Bodenhülse erstreckende Antriebswelle und die unter dem Zerkleinerungsbehälter liegenden Bauteile vor Zerkleinerungsgut, insbesondere vor aus dem Zerkleinerungsgut austretenden Flüssigkeiten geschützt sind. Der hülsenförmige Klingenhalter ist über die Bodenhülse gestülpt und die Antriebswelle ist zum Antreiben des Messers in der Bodenhülse mit dem hülsenförmigen Klingenhalter gekoppelt. Dabei bilden der hülsenförmige Klingenhalter, die Bodenhülse des Zerkleinerungsbehälters und eine sich von einer Bodenplatte des mit dem Umgehäusedeckel öffenbaren Gehäuseinnenraums, auf welcher der Zerkleinerungsbehälter aufsteht, nach oben erstreckende Aufnahmehülse eine Doppellabyrinthdichtung, welche eine gute Dichtwirkung zwischen dem von dem Zerkleinerungsgut einnehmbaren Arbeitsraum und der Motorwelle gewährleistet.

Ferner ist der zentrale Druckstempel des Komprimierers hutartig über den hülsenförmigen Klingenhalter stülpbar, damit ein hinreichender Verschiebeweg des Komprimierers in den Zerkleinerungsbehälter gegeben ist. Diese Konstruktion erfordert in vorteilhafter Weise keine oder nur geringfügige Änderungen am Konstruktionskonzept des Antriebs, des Zerkleinerungsbehälters und des Messers von bekannten Labor-Messermühlen.

Gemäß einer bevorzugten Ausführungsform der Erfindung umfasst die Messermühle ein Umgehäuse mit einem Gehäusedeckel, der bevorzugt durch eine Schwenkbewegung aufklappbar ist und in welchem eine oder mehrere der folgenden Komponenten untergebracht sind:
Der Antriebsmotor,
der Zerkleinerungsbehälter,
der Komprimierer,
das Federelement,
die Federspanneinrichtung,
die Seilzugeinrichtung,
ein Rückholmechanismus für das Federelement,
die Seilstrafferfeder der Seilzugeinrichtung und/oder
die Hebelmechanik des Federkraftverstärkers.

Der Umgehäusedeckel ist bevorzugt schwenkbar an dem auf einem Tisch aufstellbaren Grundgehäuse mittels eines Deckelscharniers befestigt. Das Grundgehäuse weist vorzugsweise eine obere Abschlussplatte auf, welche die Standfläche für den Zerkleinerungsbehälter bildet, so dass der Benutzer freien Zugang zu dem Zerkleinerungsbehälter erhält, wenn der Umgehäusedeckel aufgeklappt ist. Der haubenartige Umgehäusedeckel bildet mit der oberen Abschlussplatte des Grundgehäuses einen öffenbaren Gehäuseinnenraum, welcher zumindest den Zerkleinerungsbehälter, den Komprimierer und das Federelement beherbergt. Die obere Abschlussplatte des Grundgehäuses bildet somit vorzugsweise gleichzeitig die Bodenplatte des öffenbaren Gehäuseinnenraums, auf welcher Bodenplatte der Zerkleinerungsbehälter mit seinem Behälterboden aufsteht. Der Antriebsmotor ist bevorzugt in dem Grundgehäuse unter der Abschlussplatte und damit unter dem Zerkleinerungsbehälter und unter dem Messer angeordnet. Vorzugsweise ist die Seilzugeinrichtung zum Spannen des Federelements so an dem Deckelscharnier geführt, dass die Seilzugeinrichtung beim Aufschwenken des Umgehäusedeckels automatisch gespannt wird und somit das Federelement beim Aufklappen des Umgehäusedeckels automatisch gespannt wird und somit auch der Schubmechanismus automatisch in die obere Nullstellung und/oder der Federkraftverstärker in seine Nullstellung rückgeholt werden. Dies hat für den Benutzer mehrere Vorteile. Zunächst ist die Benutzung komfortabel, da das Federelement nicht separat vom Benutzer gespannt zu werden braucht und weiter kann eine große Hebelwirkung des Umgehäusedeckels ausgenutzt werden, so dass kein allzu großer Kraftaufwand von Seiten des Benutzers notwendig ist.

Vorzugsweise sind das Federelement, ggf. mit erster und/oder zweiter zentraler Druckplatte, und/oder die Hebelmechanik des Federkraftverstärkers bevorzugt an der Innenseite des Umgehäusedeckels befestigt und schwenken beim Öffnen des Umgehäusedeckels automatisch mit dem Umgehäusedeckel von dem Zerkleinerungsbehälter und/oder dem Komprimierer weg. Das Stellglied und/oder das Kraftverstärker-Stellglied sind vorzugsweise an der oberen Außenseite des Umgehäusedeckels befestigt, was einen bequemen Zugriff durch den Benutzer ermöglicht.

Gemäß einer bevorzugten Ausführungsform der Erfindung umfasst der Schubmechanismus einen Motor für den Komprimierer, welcher über ein Getriebe den Komprimierer mit der Schubkraft beaufschlagt, um den Komprimierer in den Zerkleinerungsbehälter einzuschieben. Dies hat den Vorteil, das die Handhabung für den Benutzer besonders komfortabel ist, da der Benutzer keine händige Kraft aufzubringen braucht.

Vorzugsweise ist der Motor für den Komprimierer an dem Umgehäusedeckel befestigt und kann mit dem Umgehäusedeckel von dem Zerkleinerungsbehälter wegschwenkt werden, was konstruktiv einfach zu bewerkstelligen ist.

Bevorzugt umfasst das Getriebe einen Spindelantrieb, insbesondere einen Spindelantrieb mit einer Teleskopspindel. Dies hat den Vorteil, dass die Bauhöhe des Umgehäusedeckels, trotz großem Hub des Schubmechanismus klein gehalten werden kann.

Vorzugsweise umfasst der Schubmechanismus noch einen Sensor, mittels welchem die Schubkraft (F) bestimmt werden kann. Zweckmäßig kann hierfür ein Hallsensor verwendet werden, mittels welchem eine Längenveränderung an einer Messfeder mit bekannter Federkennlinie bestimmt wird.

Vorzugsweise umfasst der Umgehäusedeckel einen Faltenbalg, welcher zumindest teilweise den Schubmechanismus und/oder den Motor für den Komprimierer beherbergt. Dadurch können diese in vorteilhafter Weise gegen Schmutz geschützt werden und gleichzeitig eine Verdrehsicherung für die erste zentrale Druckplatte bewirkt werden.

### Halteeinrichtung

Gemäß einem weiteren Aspekt der Erfindung wird eine Messermühle bereit gestellt, welche eine Halteeinrichtung für den Komprimierer umfasst, wobei der Komprimierer mit einer überwindbaren Haltekraft lösbar an der Halteeinrichtung aufgehängt ist. Die Haltekraft sollte dabei zumindest so dimensioniert sein, dass sie ausreicht, um das Eigengewicht des Komprimierers zu tragen. Jedoch kann Halteeinrichtung im Betrieb der Messermühle von dem Komprimierer getrennt werden, wenn die Haltekraft durch Überschreiten einer Gegenkraft überwunden wird, so die Halteeinrichtung von dem Komprimierer abreißt. Das Abreißen kann z.B. automatisch durch das Aufklappen des Umgehäusedeckels oder das Hochfahren des Schubmechanismus mit dem Stellglied oder dem Motor für den Komprimierer erfolgen, wenn der Komprimierer zumindest teilweise in den Zerkleinerungsbehälter eingeschoben ist und dort mittels einer Haftreibungskraft gehalten wird, welche größer als die Haltekraft der Halteeinrichtung ist. In vorteilhafter Weise kann der Benutzer dann nach dem Öffnen des Umgehäusedeckels sofort den Zerkleinerungsbehälter zusammen mit dem Komprimierer aus dem Gehäuseinnenraum entnehmen.

Mit anderen Worten wirkt zwischen dem Komprimierer und dem Zerkleinerungsbehälter eine Haftreibung, wenn der Komprimierer in den Zerkleinerungsbehälter eingeschoben ist und die Haltekraft zwischen der Halteeinrichtung und dem Komprimierer ist so eingestellt, dass die Halteeinrichtung von dem Komprimierer abreißt, wenn der Komprimierer in den Zerkleinerungsbehälter eingeschoben ist und die Halteinrichtung nach oben bewegt und von dem Komprimierer entfernt wird.

### Vorzugsweise

i) ist die Haltekraft zwischen der Halteeinrichtung und dem Komprimierer so eingestellt, dass der Komprimierer aufgrund der Haltekraft nicht von selbst durch die von seiner Masse verursachte Gravitationskraft in den Zerkleinerungsbehälter einsinken kann, wenn der Komprimierer an der Halteeinrichtung aufgehängt ist, oder
ii) zwischen dem Komprimierer und dem Zerkleinerungsbehälter wirkt bereits eine Haftreibung, wenn der Komprimierer sich in einer oberen Grundstellung befindet, so dass der Komprimierer aufgrund der Haftreibung nicht von selbst durch die von seiner Masse verursachte Gravitationskraft in den Zerkleinerungsbehälter einsinken kann, oder
iii) zwischen dem Komprimierer und dem Zerkleinerungsbehälter wirkt bereits eine Haftreibung, wenn der Komprimierer sich in einer oberen Grundstellung befindet, und die Haltekraft zwischen der Halteeinrichtung und dem Komprimierer so eingestellt ist, dass der Komprimierer aufgrund der Haftreibung und der Haltekraft nicht von selbst durch die von seiner Masse verursachte Gravitationskraft in den Zerkleinerungsbehälter einsinken kann, wenn der Komprimierer an der Halteeinrichtung aufgehängt ist.

Mit anderen Worten wird der Komprimierer mittels der Haltekraft und/oder mittels Haftreibung des Komprimierers in dem Zerkleinerungsbehälter in der oberen Grundstellung des Komprimierers gehalten, solange bis der Benutzer - oder ggf. die Messermühle automatisch - aktiv das Einschieben des Komprimierers auslöst bzw. steuert.

Die Haftreibung wirkt bevorzugt zwischen einem äußeren Rand des Komprimierers und einer Innenseite der äußeren Ringwandung des Zerkleinerungsbehälters. Es kann z.B. in vorteilhafter Weise eine elastische Ringdichtung, z.B. aus Moosgummi, um den äußeren Rand des Komprimierers herumlaufen, welche den Komprimierer sehr gut gegen die Ringwandung des Zerkleinerungsbehälters abdichtet, da die Haftreibung größer sein kann, als die Schwerkraft die auf den Komprimierer wirkt.

Besonders geeignet ist z.B. eine Magnethalterung, mittels welcher der Komprimierer lösbar an der Halteeinrichtung aufgehängt ist, so dass die begrenzte und überwindbare Haltekraft eine Magnetkraft ist. Eine solche Magnetkraft hält den Komprimierer gut und sicher fest, solange bis der Magnethalter durch Überwindung der Magnetkraft von dem Komprimierer abgerissen wird.

Vorzugsweise ist die Halteeinrichtung bzw. der Magnethalter ein Teil des Schubmechanismus, so dass der Komprimierer mit der überwindbaren Haltekraft lösbar an dem Schubmechanismus befestigt ist.

Bevorzugt ist der Komprimierer mit der überwindbaren Haltekraft lösbar an der ersten zentralen Druckplatte aufgehängt und die überwindbare Haltekraft wirkt zwischen der ersten zentralen Druckplatte und dem Komprimierer.

Vorzugsweise ist auch die Halteeinrichtung in dem Umgehäuse, insbesondere in dem öffenbaren Gehäuseinnenraum untergebracht.

Insbesondere umfasst demnach der Komprimierer eine den Schneidklingen des Messers zugewandte und auf das Zerkleinerungsgut wirkende Kompressionsscheibe und einen zentralen Druckstempel. Der Schubmechanismus umfasst an seiner dem Komprimierer zugewandten ersten Seite eine erste zentrale Druckplatte und die erste zentrale Druckplatte beaufschlagt den zentralen Druckstempel des Komprimierers mit der Schubkraft, so dass die überwindbare Haltekraft zwischen der ersten zentralen Druckplatte und dem zentralen Druckstempel des Komprimierers wirkt.

Insbesondere umfasst die Messermühle also ein aufklappbares Umgehäuse, welches ein auf einem Tisch aufstellbares Grundgehäuse und einen um ein Scharnier schwenkbaren Umgehäusedeckel umfasst, wobei die Halteeinrichtung beim Aufschwenken des Umgehäusedeckels automatisch von dem Komprimierer abreißt, wenn der Komprimierer in den Zerkleinerungsbehälter eingeschoben ist.

### Kühleinrichtung

Gemäß einem weiteren Aspekt der Erfindung wird eine Messermühle, insbesondere wie vorstehend beschrieben, bereit gestellt, welche eine Kühleinrichtung zum Kühlen des Zerkleinerungsbehälters aufweist.

Die Kühleinrichtung kühlt dabei vorzugsweise den Behälterboden des Zerkleinerungsbehälters, was konstruktiv gut zu bewerkstelligen ist und eine große Fläche zum Wärmeübertrag ermöglicht.

Wie vorstehend bereits beschrieben wurde, wird weist der Gehäuseinnenraum eine Bodenplatte auf, auf welcher der Zerkleinerungsbehälter im Betrieb aufsteht und welche den Gehäuseinnenraum von dem Grundgehäuse abgrenzt, d.h. welcher gleichzeitig die obere Deckplatte des Grundgehäuses darstellt.

Gemäß einer bevorzugten Ausführungsform der Erfindung kühlt nun die Kühleinrichtung die Bodenplatte des Gehäuseinnenraums, und die Bodenplatte kühlt wiederum den Behälterboden des Zerkleinerungsbehälters, welcher im Betrieb mit seinem Behälterboden auf der Bodenplatte aufsteht.

Hierzu wird vorzugsweise ein Kühlfluid, z.B. Wasser, durch Kanäle in der Bodenplatte geleitet, um die Bodenplatte zu kühlen.

Vorzugsweise ist an der Bodenplatte ein Temperatursensor angebracht, welcher die Temperatur der Bodenplatte misst, um die Messermühle zu steuern. Dadurch können empfindliche Güter zerkleinert werden und die Drehzahl so hoch wie möglich gewählt werden.

Die gekühlte Bodenplatte ist dabei vorzugsweise einstückig mit der sich nach oben erstreckenden Aufnahmehülse ausgebildet und die Bodenhülse des Zerkleinerungsbehälters ist über die Aufnahmehülse gestülpt. Die Antriebswelle des Antriebsmotors erstreckt sich demnach durch die zentrale Öffnung in der Bodenplatte und durch die konzentrisch in der Bodenhülse verlaufende Aufnahmehülse nach oben in den Gehäuseinnenraum und ist dort mit dem Messer gekoppelt, z.B. mittels einem gesteckten Mehrkant, um das Messer anzutreiben.

Gemäß einer bevorzugten Ausführungsform der Erfindung weist die Bodenplatte einen, vorzugsweise einstückigen, sich nach oben erstreckenden peripheren Ringrand auf, welcher zusammen mit der Aufnahmehülse eine Aufnahme und radiale Zentrierung des Zerkleinerungsbehälters bildet, wenn im Betriebszustand der Messermühle der Zerkleinerungsbehälter mit seinem Behälterboden auf einer oberen Standfläche der Bodenplatte steht. Dadurch kann eine stabile Halterung des Zerkleinerungsbehälters und präzise Zentrierung in der Messermühle gewährleistet werden.

Vorzugsweise weist der Ringrand der Bodenplatte einen Ausschnitt auf, in welchem der Zerkleinerungsbehälter im Betriebszustand der Messermühle vertikal arretiert werden kann. Dadurch kann der Zerkleinerungsbehälter durch eine kombinierte Setz- und Drehbewegung mit einer Hand ergonomisch auf die Bodenplatte aufgesetzt und arretiert werden.

Gemäß einer bevorzugten Ausführungsform der Erfindung ist die Bodenplatte zumindest zweiteilig aus einer unteren Kühlplatte und einer oberen Kühlplatte zusammengesetzt. In die Unterseite der oberen Kühlplatte und/oder in die Oberseite der unteren Kühlplatte sind Kühlkanäle eingefräst, und die Unterseite der oberen Kühlplatte ist mit der Oberseite der unteren Kühlplatte fluiddicht verbunden. Anschließend werden die vorzugsweise aus Metall hergestellte obere und die untere Kühlplatte fluiddicht miteinander verbunden, z.B. verschweißt. Das hat den Vorteil, dass z.B. auch ringförmige Kühlkanäle um die zentrale Öffnung herum gefräst werden können.

Als besonders geeignet haben sich obere und untere Kühlplatten aus Aluminium oder einer Aluminiumlegierung gezeigt, welche z.B. präzise und dicht miteinander laserverschweißt werden können.

Vorzugsweise ist die Aufnahmehülse einstückig mit der oberen Kühlplatte ausgebildet.

Um die relative Orientierung beim Zusammenfügen und Verschweißen der oberen und unteren Kühlplatte in einer Ebene senkrecht zur zentralen Achse zu gewährleisten, können zwischen der oberen und der unteren Kühlplatte Positionierungsmittel, z.B. Positionierstifte, vorgesehen sein.

Ferner vorzugsweise sind an die untere Kühlplatte Zu- und Ableitungen für das Kühlfluid angeschlossen, um das Kühlfluid durch die untere Kühlplatte zu leiten und die Zu- und Ableitungen durch das Grundgehäuse zu führen und am unteren Grundgehäuse an einen externen Kühlmittelkreislauf anzuschließen.

### Messer

Gemäß einem weiteren Aspekt der Erfindung umfasst das Messer eine Ventilationseinrichtung, welche durch Rotation des Messers einen Überdruck in dem Zerkleinerungsbehälter erzeugt.

Dadurch kann in vorteilhafter Weise verhindert werden, das aus dem Zerkleinerungsgut austretende Flüssigkeit durch Kapillarwirkung zwischen dem hülsenförmigen Klingenhalter und der Bodenhülse des Zerkleinerungsbehälters nach oben steigen und sogar in den Bereich der Motorwelle des Antriebsmotors gelangen kann, was unerwünscht ist.

Vorzugsweise umfasst die Ventilationseinrichtung zumindest einen Ventilationsflügel, welcher an dem hülsenförmigen Klingenhalter angeordnet, vorzugsweise einstückig mit einer umlaufenden Ringwand des hülsenförmigen Klingenhalters gespritzt ist. Dies ist z.B. durch Kunststoffspritzguss realisierbar.

Demnach bilden vorzugsweise die Bodenhülse und der hülsenförmige Klingenhalter eine, insbesondere berührungslose, Labyrinthdichtung und die Ventilationseinrichtung umfasst zumindest einen Ventilationsflügel, welcher an einer Innenseite des hülsenförmigen Klingenhalters angebracht ist, wobei der Ventilationsflügel bei Rotation des Messers eine Luftströmung durch die Labyrinthdichtung in Richtung des Arbeitsraumes des Zerkleinerungsbehälters erzeugt.

Vorzugsweise ist der Ventilationsflügel, z.B. in Form einer eine helixförmigen Wulst, dabei an einer umlaufenden Ringwand des hülsenförmigen Klingenhalters innerhalb des ringförmigen Spaltes der Labyrinthdichtung angeordnet und rotiert in dem ringförmigen Spalt, wenn das Messer rotiert.

Insbesondere weist der hülsenförmige Klingenhalter eine äußere und eine innere umlaufende Ringwand auf, wobei die innere Ringwand konzentrisch innerhalb der äußeren Ringwand verläuft. Die innere und die äußere Ringwand sind an einem oberen Ende miteinander verbunden und bilden somit zwischen der äußeren und der inneren Ringwand einen nach oben geschlossenen und nach unten offenen ringförmigen Spalt, in welchen sich die Bodenhülse des Zerkleinerungsbehälters hinein erstreckt, wenn das Messer über die Bodenhülse gestülpt ist, was einen Teil der Labyrinthdichtung bildet.

Weiter vorzugsweise bildet auch die sich nach oben erstreckende Aufnahmehülse der Bodenplatte zum Aufstellen des Zerkleinerungsbehälters einen Teil der Labyrinthdichtung, indem die Bodenhülse des Zerkleinerungsbehälters über die Aufnahmehülse gestülpt ist und die innere umlaufende Ringwand und die Aufnahmehülse axial überlappen, um die Aufnahmehülse in die Labyrinthdichtung mit einzubeziehen. Dadurch wird eine Doppellabyrinthdichtung gebildet.

Vorzugsweise verjüngt sich die Wandstärke der Aufnahmehülse an ihrem oberen Ende und die innere umlaufende Ringwand überlappt axial mit dem verjüngten Bereich der Aufnahmehülse, z.B. indem die innere umlaufende Ringwand einen größeren Durchmesser als die Aufnahmehülse aufweist und konzentrisch über die Aufnahmehülse gestülpt ist, so dass die innere Ringwand die Aufnahmehülse auf einem Stück entlang der Längsachse, d.h. axial teilweise, ringförmig umschließt. Dadurch kann gewährleistet werden, dass Flüssigkeit aus dem Zerkleinerungsbehälter, welche eventuell doch in den Innenbereich des hülsenförmigen Klingenhalters gelangen könnte, trotzdem nicht an die Antriebswelle gelangt, sondern außen an der Aufnahmehülse entlang lediglich auf die Bodenplatte abläuft.

Zusammenfassend bilden also radial von innen nach außen gesehen, die Aufnahmehülse, die über die Aufnahmehülse gestülpte innere Ringwand des hülsenförmigen Klingenhalters, die zwischen die innere Ringwand und die äußere Ringwand eingreifende Bodenhülse des Zerkleinerungsbehälters und die äußere Ringwand des hülsenförmigen Klingenhalters eine Doppellabyrinthdichtung, welche eventuelle Flüssigkeit noch besser von der Antriebswelle weg hält. Ggf. kann hiermit sogar auf eine weitere Dichtung an der Antriebswelle selbst verzichtet werden.

Gemäß einer weiteren bevorzugten Ausführungsform der Erfindung ist der hülsenförmige Klingenhalter zumindest zweiteilig ausgebildet, und zwar mit einem axial beidseits offenen äußeren Klingenhaltermantel und einem Klingenhalterdeckel zum Verschließen des Klingenhaltermantels an dessen oberem Ende, wobei zumindest eine Schneidklinge an einer Außenseite des Klingenhaltermantel angeordnet ist. Dies hat den Vorteil, dass der hülsenförmige Klingenhalter leicht und gründlich gereinigt werden kann.

Vorzugsweise ist die innere Ringwand einstückig mit dem Klingenhalterdeckel ausgebildet, was produktionstechnisch vorteilhaft ist.

Vorzugsweise ist der Ventilationsflügel einstückig mit dem Klingenhaltermantel ausgebildet. Insbesondere die Zweiteiligkeit des hülsenförmigen Klingenhalters ermöglicht das Spritzen des Klingenhaltermantels mit einstückig an der Innenseite angeformtem Ventilationsflügel ohne Hinterschnitt beim Kunststoffspritzen.

Vorzugswiese umfasst der Komprimierer ein Ventil zum Abführen des mittels der Ventilationseinrichtung erzeugten Überdrucks in dem Zerkleinerungsbehälter. Dadurch kann in vorteilhafter Weise ein stetiger Luftstrom durch die Labyrinthdichtung in Richtung des Arbeitsraums in dem Zerkleinerungsbehälters erzeugt werden.

Gemäß einer weiteren bevorzugten Ausführungsform der Erfindung ist noch eine Wellenführungshülse zur Führung der Antriebswelle des Antriebsmotors umfasst, welche sich durch die Bodenplatte hindurch konzentrisch in der Aufnahmehülse nach oben erstreckt, so dass die Aufnahmehülse konzentrisch zwischen der Wellenführungshülse und der Bodenhülse des Zerkleinerungsbehälters verläuft. Durch die Kombination der Wellenführungshülse mit der zusätzlichen Aufnahmehülse der Bodenplatte kann effektiv verhindert werden, dass Flüssigkeit aus dem Zerkleinerungsbehälter in den Bereich der Antriebswelle gelangt.

Ein Aspekt des Gegenstandes der Erfindung betrifft auch das rotierbare Messer für die vorstehend beschriebene Messermühle, wobei das Messer hutartig mit einem zentralen hülsenförmigen Klingenhalter ausgebildet ist, an dessen Umfangswand eine oder mehrere Schneidklingen angeordnet sind, und der hülsenförmige Klingenhalter über die Bodenhülse des Zerkleinerungsbehälters stülpbar ist, wobei das Messer eine Ventilationseinrichtung umfasst, mittels welcher ein Überdruck in dem Zerkleinerungsbehälter erzeugbar ist, wenn das Messer in dem Zerkleinerungsbehälter rotiert.

Ein weiterer Aspekt des Gegenstands der Erfindung ist auch das rotierbare Messer für die vorstehend beschriebene Messermühle wobei das Messer hutartig mit einem hülsenförmigen Klingenhalter ausgebildet ist, an dessen Umfangswand eine oder mehrere Schneidklingen angeordnet sind, und der hülsenförmige Klingenhalter über die Bodenhülse des Zerkleinerungsbehälters stülpbar ist, wobei der hülsenförmige Klingenhalter zumindest zweiteilig ausgebildet ist, mit einem axial beidseits offenen äußeren Klingenhaltermantel und einem Klingenhalterdeckel zum Verschließen des Klingenhaltermantels an dessen oberem Ende, wobei zumindest eine der Schneidklingen an einer radialen Außenseite des Klingenhaltermantels angeordnet ist.

Bevorzugt ist der Klingenhalterdeckel mit dem äußeren Klingenhaltermantel lösbar verrastet, so dass der Benutzer die beiden Teile einfach zum Reinigen voneinander trennen kann.

Ferner vorzugsweise ist die innere umlaufende Ringwand einstückig mit dem Klingenhalterdeckel ausgebildet und die innere Ringwand verläuft konzentrisch innerhalb des Klingenhaltermantels, so dass zwischen dem Klingenhaltermantel und der inneren Ringwand ein nach oben geschlossener und nach unten offener ringförmiger Spalt gebildet wird, in welchen sich die Bodenhülse des Zerkleinerungsbehälters hinein erstreckt, wenn das Messer über die Bodenhülse des Zerkleinerungsbehälters gestülpt ist. Dies ist Produktions- und Reinigungstechnisch vorteilhaft.

Vorzugsweise ist der Ventilationsflügel einstückig an der Innenseite des Klingelhaltermantels einstückig angeformt, was ebenfalls Produktionstechnisch vorteilhaft ist.

Ein Aspekt des Gegenstandes der Erfindung betrifft auch eine Messermühle, umfassend:
den Zerkleinerungsbehälter mit dem Behälterboden zum Aufnehmen des Zerkleinerungsguts,
das in dem Zerkleinerungsbehälter rotierende Messer, um das Zerkleinerungsgut zu zerkleinern,
den unter dem Zerkleinerungsbehälter angeordneten Antriebsmotor zum Antreiben des Messers, wobei der Zerkleinerungsbehälter die mit dem Behälterboden verbundene sich nach oben erstreckende Bodenhülse aufweist, wobei das Messer hutartig mit dem hülsenförmigen Klingenhalter ausgebildet ist, an welchem eine oder mehrere Schneidklingen befestigt sind, und der hülsenförmige Klingenhalter über die Bodenhülse gestülpt ist,
das Umgehäuse, welches ein auf einem Tisch aufstellbares Grundgehäuse und einen öffenbaren Umgehäusedeckel umfasst, wobei der Antriebsmotor in dem Grundgehäuse untergebracht ist und der Umgehäusedeckel über dem Grundgehäuse einen öffenbaren Gehäuseinnenraum definiert, in welchem zumindest der Zerkleinerungsbehälter untergebracht ist, und wobei der Gehäuseinnenraum eine Bodenplatte aufweist, auf welcher im Betrieb der Zerkleinerungsbehälter steht und wobei sich eine Aufnahmehülse von der Bodenplatte nach oben erstreckt, wobei die Bodenhülse des Zerkleinerungsbehälters über die Aufnahmehülse der Bodenplatte gestülpt ist, und
die Wellenführungshülse für die Antriebswelle des Antriebsmotors, welche sich durch die Bodenplatte hindurch in der Aufnahmehülse der Bodenplatte nach oben erstreckt, so dass die Aufnahmehülse der Bodenplatte konzentrisch zwischen der Wellenführungshülse und der Bodenhülse des Zerkleinerungsbehälters verläuft.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der Ausführungsbeispiele miteinander kombiniert werden können.

### Kurzbeschreibung der Figuren

Es zeigen:
- Fig. 1: eine Aufsicht auf das Stellglied und das Kraftverstärker-Stellglied in der oberen Nullstellung,
- Fig. 2: eine teilweise geschnittene Seitenansicht des Stellgliedes, des Federkraftverstärker-Stellgliedes und des Federelements in der oberen Nullstellung,
- Fig. 3: eine Ansicht von oben auf einen Teil des Stellgliedes mit der Seilzugeinrichtung in der oberen Nullstellung,
- Fig. 4: einen vertikalen Schnitt durch den oberen Teil der Messermühle in der oberen Nullstellung,
- Fig. 5: eine Ausschnittsvergrößerung der Seilstrafferfeder aus Fig. 4 in der oberen Nullstellung,
- Fig. 6 bis 10: wie Fig. 1 bis 5, aber in der Zwischenstellung,
- Fig. 11 bis 15: wie Fig. 1 bis 5, aber in der unteren Endstellung,
- Fig. 16 bis 20: wie Fig. 6 bis 10, aber mit aktiviertem Federkraftverstärker,
- Fig. 21 bis 25: wir Fig. 11 bis 15, aber mit aktiviertem Federkraftverstärker,
- Fig. 26 bis 30: wie Fig. 16 bis 20 bei halb aufgeschwenktem Umgehäusedeckel,
- Fig. 31 bis 35: wie Fig. 1 bis 5 bei vollständig aufgeschwenktem Gehäusedeckel,
- Fig. 36: eine perspektivische Ansicht des Federelements,
- Fig. 37: eine Darstellung der Blattfedern des Federelements,
- Fig. 38: eine perspektivische Ansicht des Stellgliedes,
- Fig. 39: eine perspektivische Explosionsdarstellung des Federkraftverstärker-Stellgliedes,
- Fig. 40: eine perspektivische Darstellung der Messermühle gemäß einer verfeinerten Weiterbildung der Messermühle aus Fig. 1 bis 35 mit geschlossenem Umgehäusedeckel,
- Fig. 41: eine aufgeschnittene perspektivische Darstellung der Messermühle aus Fig. 40,
- Fig. 42: einen vertikalen Schnitt entsprechend Fig. 41,
- Fig. 43: eine teilweise geschnittene Darstellung der Messermühle aus Fig. 40 bis 42 von links in Fig. 42,
- Fig. 44: eine aufgeschnittene perspektivische Darstellung des oberen Bereichs der Messermühle aus Fig. 40,
- Fig. 45: eine perspektivische Darstellung des Oberteils der Messermühle mit aufgeschnittenem Gehäusedeckel,
- Fig. 46: eine aufgeschnittene perspektivische Darstellung des oberen Bereichs der Messermühle aus Fig. 41,
- Fig. 47: eine Detaildarstellung des Bereichs C in Fig. 46,
- Fig. 48 bis 51: aufgeschnittene Darstellungen des Stellgliedes zur Veranschaulichung der Verrastung und Funktionsweise,
- Fig. 52: einen vertikalen Querschnitt durch den oberen Bereich der Messermühle gemäß einer weiteren Ausführungsform,
- Fig. 53: die Messermühle gemäß Fig. 52 mit aufgeklapptem Umgehäusedeckel,
- Fig. 54: wie Fig. 53 mit geschlossenem Umgehäusedeckel in der Nullstellung des Schubmechanismus,
- Fig. 55: wie Fig. 54 aber mit dem Schubmechanismus in einer Zwischenstellung,
- Fig. 56: wie Fig. 54, aber mit dem Schubmechanismus in der unteren Endstellung,
- Fig.57: wie Fig. 56, aber mit wieder in die Nullstellung gefahrenem Schubmechanismus,
- Fig. 58: eine perspektivische Darstellung der zweiteiligen Bodenplatte zur Kühlung des Zerkleinerungsbechers,
- Fig. 59: einen perspektivischen vertikalen Schnitt durch die Bodenplatte aus Fig. 58,
- Fig. 60: eine Seitenansicht auf die Bodenplatte aus Fig. 58,
- Fig. 61: eine Ansicht von oben auf die Bodenplatte aus Fig. 58,
- Fig. 62: einen vertikalen Schnitt durch die Bodenplatte aus Fig. 58 mit verbundener unterer und oberer Kühlplatte,
- Fig. 63: einen vertikalen Schnitt durch eine Vergrößerung des Bereichs um den Zerkleinerungsbehälter der Messermühle aus Fig. 40,
- Fig. 64: eine geschnittene perspektivische Explosionsdarstellung einer Ausführungsform des Messers,
- Fig. 65: eine perspektivische geschnittene Darstellung des zusammengebauten Messers aus Fig. 64,
- Fig. 66 bis 67: Seitenansichten des Messers aus Fig. 64,
- Fig. 68: eine Ansicht von oben auf das Messer aus Fig. 64,
- Fig. 69 bis 72: verschiedene vertikale Schnitte durch das Messer aus Fig. 64.

### Detaillierte Beschreibung der Erfindung

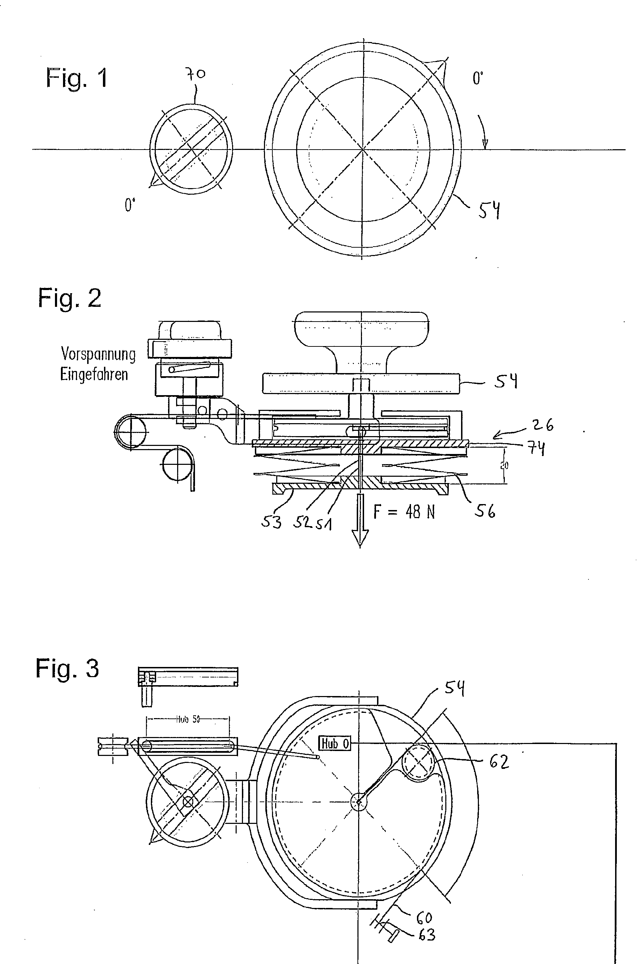

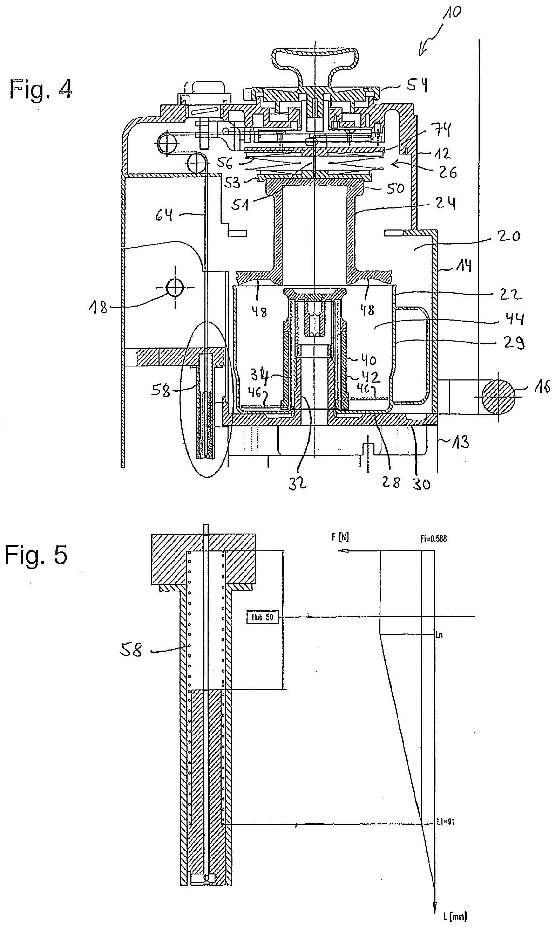

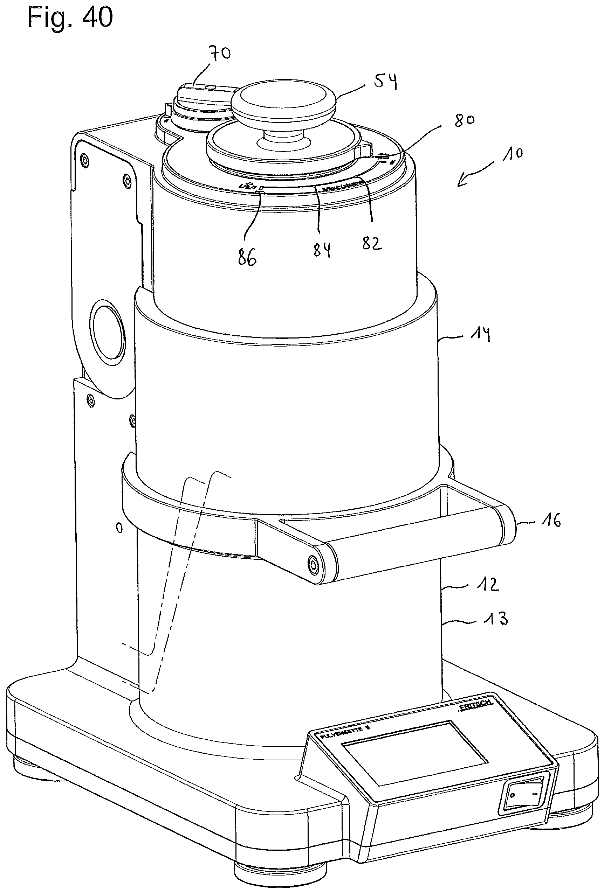

Bezug nehmend auf Fig. 1 bis 5, insbesondere auf Fig. 4 weist die Labor-Messermühle 10 ein Umgehäuse 12 auf, welches ein auf einen Tisch aufstellbares Grundgehäuse 13 und einen mit einem Schwenkgriff 16 um ein Schwenklager 18 schwenkbaren Umgehäusedeckel 14 umfasst (vgl. auch die Fig. 40-43). Der in diesem Beispiel transparente haubenförmige Umgehäusedeckel 14 verschließt in der in Fig. 4 dargestellten geschlossenen Stellung einen Gehäuseinnenraum 20, in welchem der Zerkleinerungsbehälter 22, der Komprimierer 24, der Schubmechanismus 26 sowie ggf. weitere Teile beherbergt sind.

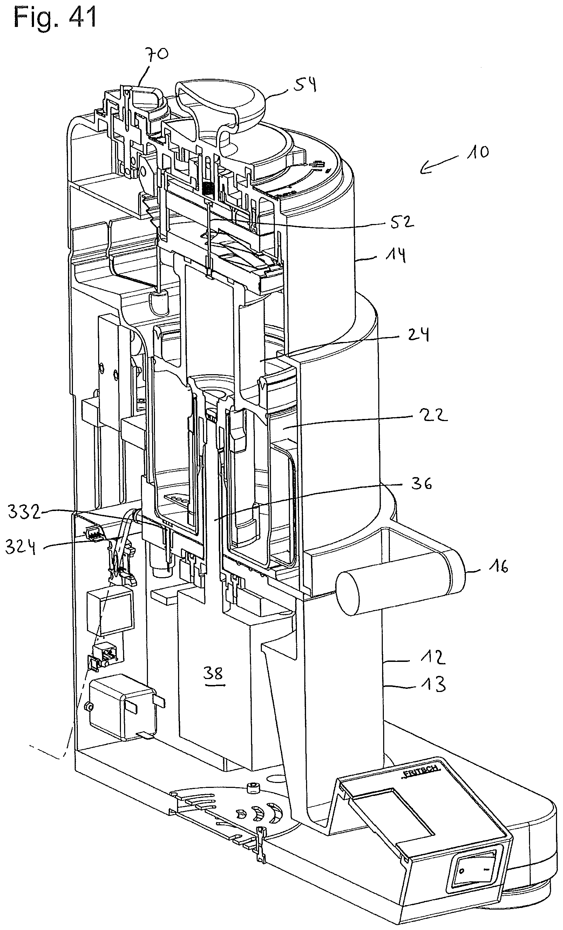

Der Zerkleinerungsbehälter 22 steht mit seinem Behälterboden 28 auf einer oberen Abschlussplatte 30 des Grundgehäuses 13 und wird seitlich durch eine umlaufende Ringwandung 29 begrenzt. Von der oberen Abschlussplatte 30 erstreckt sich zentrisch nach oben eine Aufnahmehülse 32, auf welche der Zerkleinerungsbehälter 22 mit seiner Bodenhülse 34 aufgesteckt ist. Die Motorwelle 36 des Antriebsmotors 38 (in Fig. 4 nicht dargestellt, siehe hierzu die Fig. 41, 42 und 63) erstreckt sich innerhalb der Aufnahmehülse 32 nach oben und koppelt an den hülsenförmigen Klingenhalter 40 des Messers 42 an, um das Messer 42 anzutreiben. Der hülsenförmige Klingenhalter 40 ist über die Bodenhülse 34 gestülpt und bildet mit der Bodenhülse 34 und der Aufnahmehülse 32 eine Doppellabyrinthdichtung, welche eine hinreichende Dichtung zwischen dem von dem Zerkleinerungsgut einnehmbaren Arbeitsraum 44 und der Antriebswelle 36 gewährleistet.

Wenn das Zerkleinerungsgut in den Arbeitsraum 44 eingefüllt ist und der Umgehäusedeckel 14 geschlossen ist, kann die Messermühle 10 in Betrieb genommen werden.

Am unteren Ende des Klingenhalters 40 befinden sich in diesem Beispiel zwei vertikal leicht versetzte Schneidklingen 46 im Wesentlichen unmittelbar über den Behälterboden 28.

Der Komprimierer 24 weist eine in den ringförmigen Arbeitsraum 44 passende und den Arbeitsraum 44 nach oben im Wesentlichen verschließende ringförmige Kompressionsscheibe 48 sowie einen sich nach oben erstreckenden Druckstempel 50 auf. Der Druckstempel 50 ist als nach oben geschlossene Hülse ausgebildet und über den Klingenhalter 40 stülpbar. Um den von dem Zerkleinerungsgut einnehmbaren Arbeitsraum 44 zu verkleinern, wird der Komprimierer 24 von oben nach unten in den Zerkleinerungsbehälter 22 eingeschoben, wobei der hülsenförmige Druckstempel 50 über den Klingenhalter 40 gestülpt ist und von diesem geführt wird.

In den Fig. 1 bis 5 befindet sich der Schubmechanismus 26 in der oberen Nullstellung und der Schubmechanismus 26 ist verrastet. Hierzu hält in der Nullstellung die Federspanneinrichtung 51 umfassend eine Seilzugeinrichtung 52 die untere zentrale Druckplatte 53 des Federelements 56 fest, sodass das Federelement 56 noch keine Kraft auf den Druckstempel 50 ausübt. Die Seilzugeinrichtung 52 wird durch das Stellglied 54 in Form eines Drehknopfes in der Nullstellung gehalten. Hierzu ist ein erstes Seil 60 der Seilzugeinrichtung 52 über eine Wickelrolle 62 an dem Drehknopf 54 gewickelt und an einem Fixierpunkt 63 befestigt ist (vgl. Fig. 3). Das erste Seil 60 verläuft in einer umlaufenden Nut 65 des Drehknopfes 54.

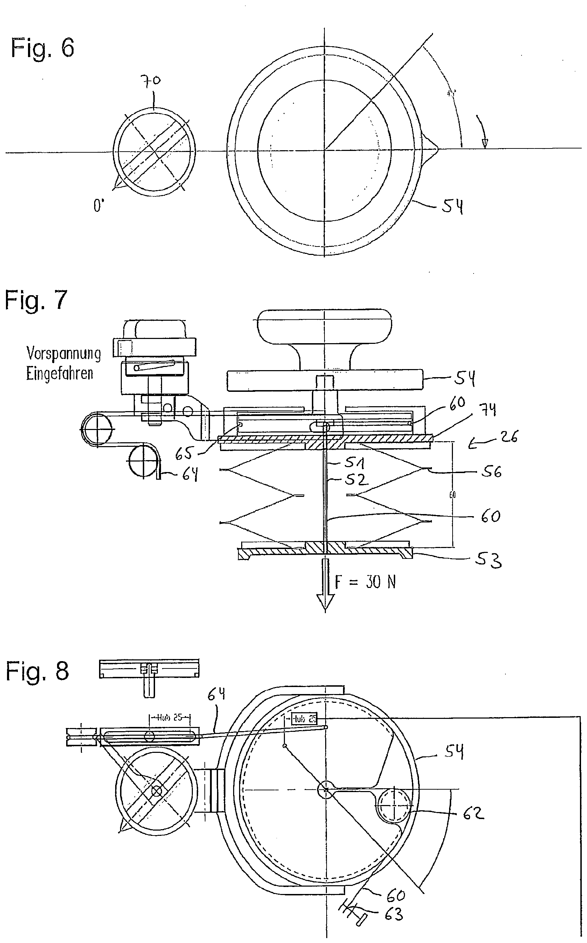

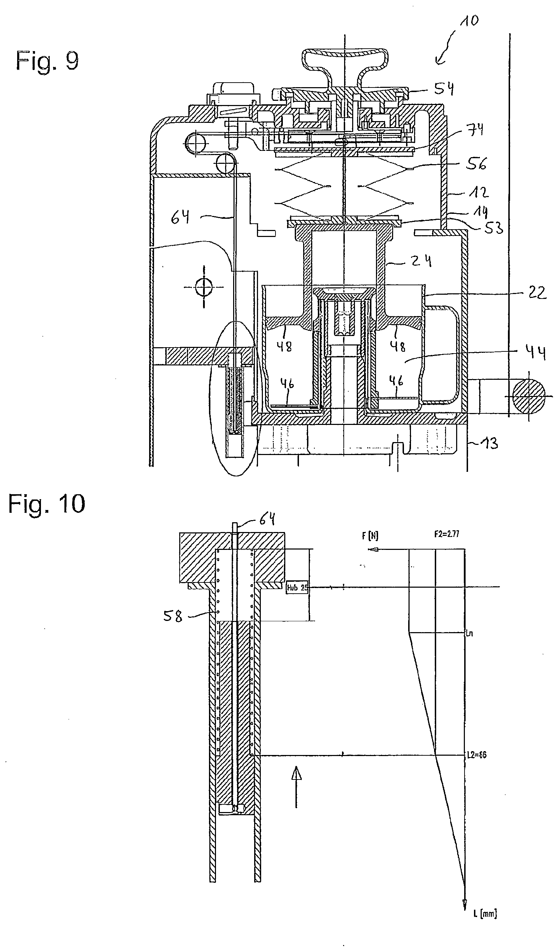

Bezug nehmend auf die Fig. 6 bis 10 wird der Schubmechanismus 26 dadurch aktiviert, dass der Drehknopf 54 entrastet und um einen vorbestimmten Drehwinkel, im vorliegenden Beispiel 45° nach rechts, gedreht wird. Dadurch wird das die untere zentrale Druckplatte 53 festhaltende erste Seil 60 gelöst und ermöglicht eine Entspannung des Federelements 56. Der in Fig. 6 bis 10 dargestellte Zustand entspricht einer Zwischenstellung des Schubmechanismus 26, bei welcher das Federelement 56 sich von der Nullstellung mit einer vertikalen Ausdehnung von 20 mm zu der Zwischenstellung mit einer vertikalen Ausdehnung von 60 mm bewegt und demnach einen Hub von 40 mm nach unten bewirkt und wobei die untere zentrale Druckplatte 53 den Druckstempel 50 mit einer Schubkraft F = 30 N beaufschlagt. Bezug nehmend auf Fig. 9 befindet sich der Komprimierer 24 in der Zwischenstellung. Die Seilzugeinrichtung 52 bildet bei der in Fig. 6 bis 10 dargestellten Stellung des Drehknopfes 54 in der Zwischenstellung einen Anschlag, um den Vorschub in der Zwischenstellung zu stoppen.

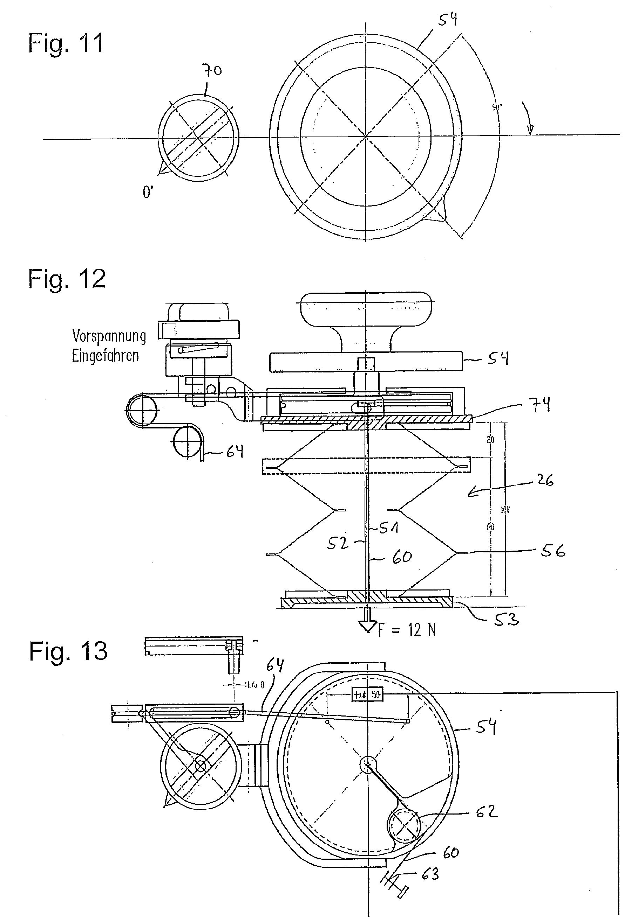

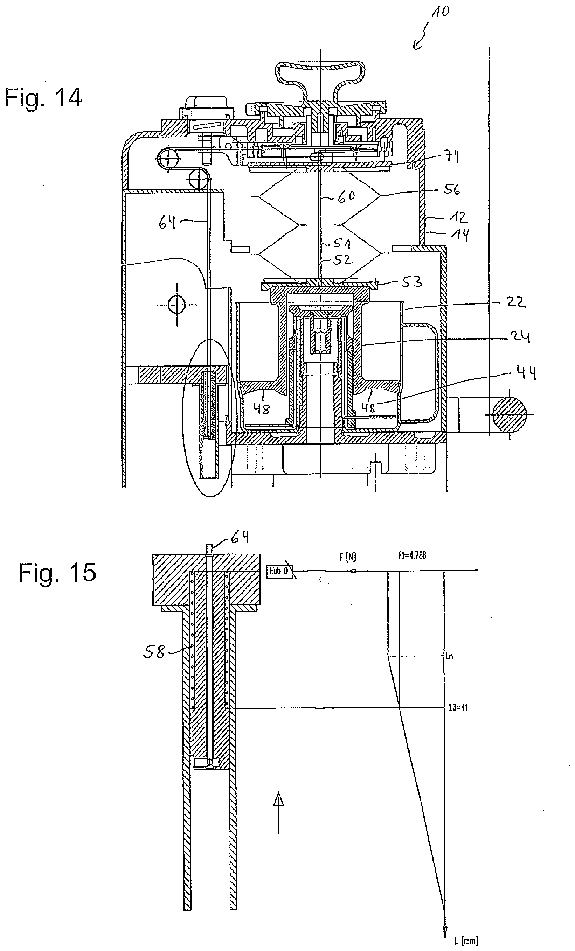

Bezug nehmend auf die Fig. 11 bis 15 kann der Drehknopf 54 noch um weitere 45° nach rechts gedreht werden, was durch weitere Abwicklung des ersten Seils 60 über die Wickelrolle 62 einen weiteren Hub von zusätzlichen 40 mm ermöglicht. D.h. das Federelement 56 vollzieht von der Nullstellung bis zur unteren Endstellung einen Gesamthub von 80 mm.

Die von der Nullstellung über die Zwischenstellung zur Endstellung fortschreitende Entspannung des Federelements 56 bewirkt demnach, vermittelt durch die untere zentrale Druckplatte 53, welche den Druckstempel 50 mit der Federkraft beaufschlagt, ein kontinuierliches, vom Benutzer im Rahmen der konstruktiven Vorgaben steuerbares Federkraftbeaufschlagtes Einschieben des Komprimierers 24 in den Zerkleinerungsbehälter 22. Das Einschieben des Komprimierers 24 erfolgt auf das Messer 42 bzw. dessen Schneidklingen 46 zu, um den Arbeitsraum 44 zwischen den Schneidklingen 46 und der Kompressionsscheibe 48 zu verkleinern und damit das Zerkleinerungsgut zu komprimieren. Es ist ersichtlich, dass das Einschieben des Komprimierers 24 beziehungsweise die Verkleinerung des Arbeitsraums 44 über den Drehknopf 54 zu jedem beliebigen Zeitpunkt vor, während und/oder nach dem Zerkleinerungsvorgang aktiviert und im Rahmen der konstruktiven Vorgaben von dem Benutzer gesteuert werden kann.

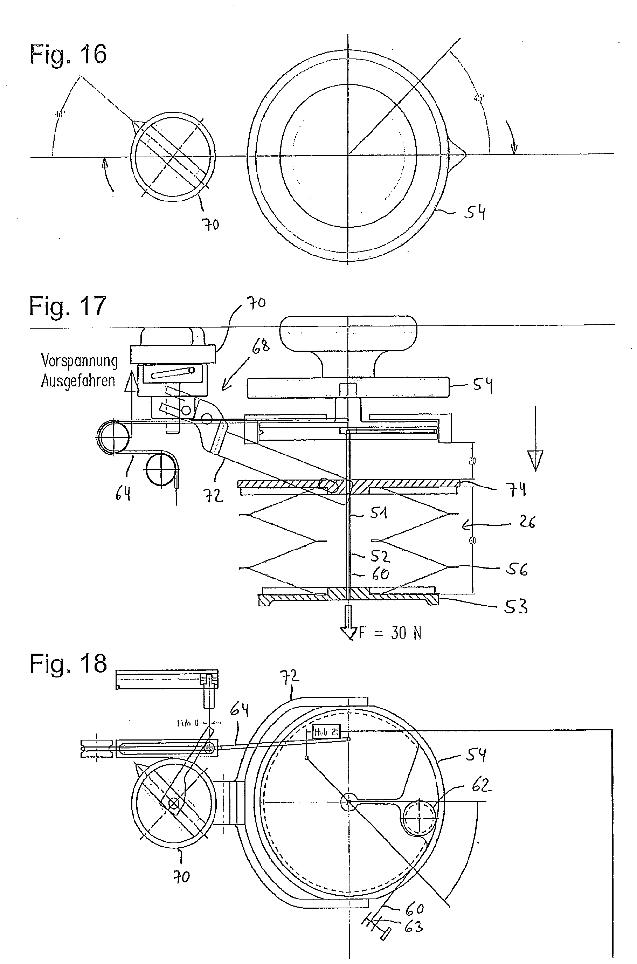

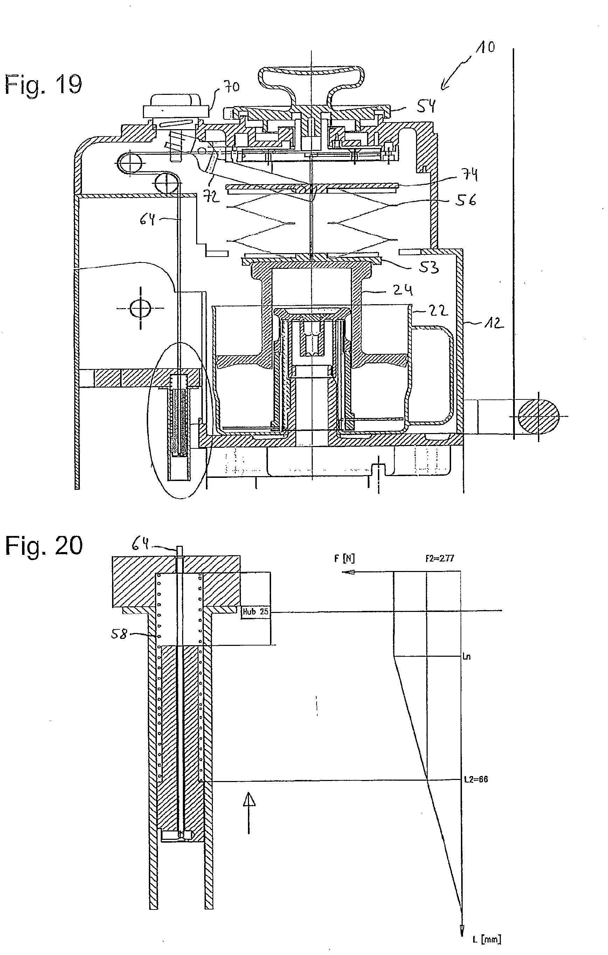

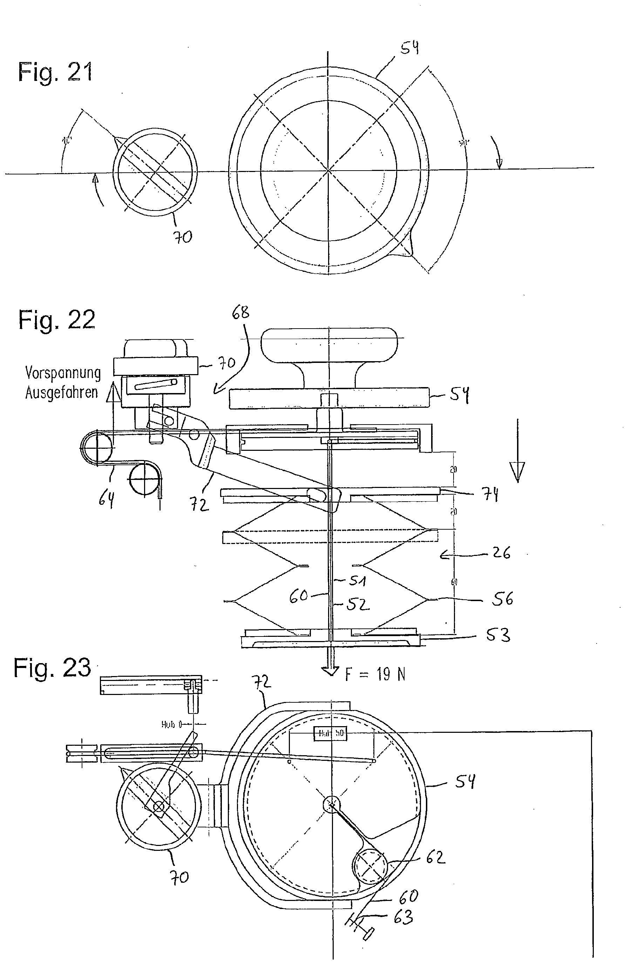

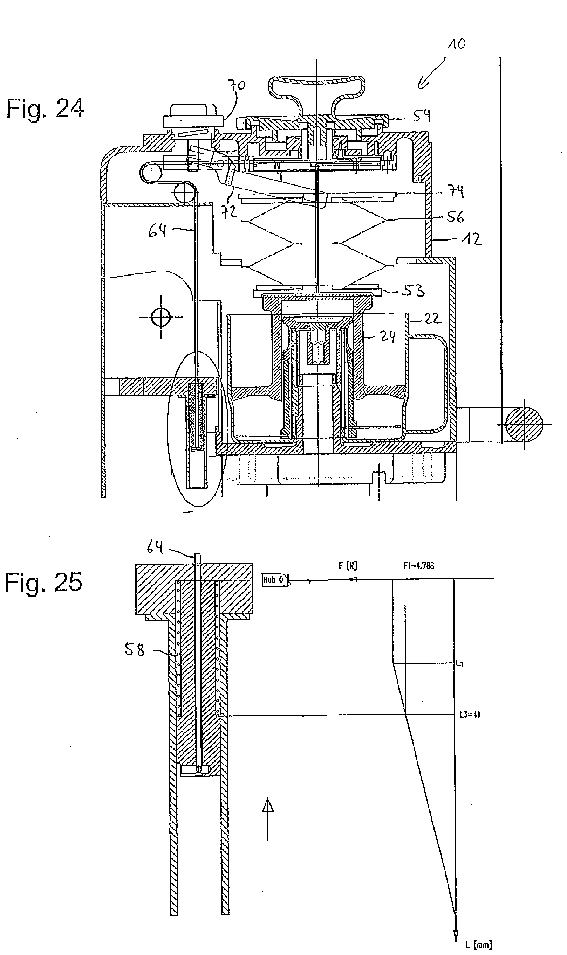

Bezug nehmend auf die Fig. 16 bis 25 weist die Messermühle 10 noch einen Federkraftverstärker 68 ("Booster") auf, welcher eine Vorspannkraftverstellung des Federelements 56 bewirkt und durch ein Kraftverstärker-Stellglied 70, in diesem Beispiel ebenfalls in Form eines zweiten Drehknopfes aktiviert werden kann. Durch Drehen des zweiten Drehknopfes 70 wird ein Hebel 72 aktiviert, welcher die obere zentrale Druckplatte 74 des Federelements 56 um einen vorbestimmten Hub, in diesem Beispiel 20 mm, nach unten drückt. In diesem Beispiel ist der Federkraftverstärker 68 stufenlos einstellbar und wird mittels Selbsthemmung in der eingestellten Stellung gehalten. Der maximale Hub des Federkraftverstärkers 68 beträgt in diesem Beispiel 22 mm. Der Hebel 72 ist wie in Fig. 13 zu sehen ist, in diesem Ausführungsbeispiel als Gabelhebel ausgebildet, welcher beidseits seitlich an die obere zentrale Druckplatte 74 gekoppelt ist. Dadurch, dass mittels der oberen zentrale Druckplatte 74 das Federelement 56, welches in Fig. 22 in der unteren Endstellung dargestellt ist, um 20 mm komprimiert wird, steigt die Schubkraft, unmittelbar bevor die untere Endstellung erreicht wird von 12 N auf 19 N, wobei allerdings die Seilzugeinrichtung 52 bei der in Fig. 21 bis 25 dargestellten Stellung des Drehknopfes 54 in der unteren Endstellung einen Anschlag bildet, um den Vorschub in der unteren Endstellung zu stoppen.

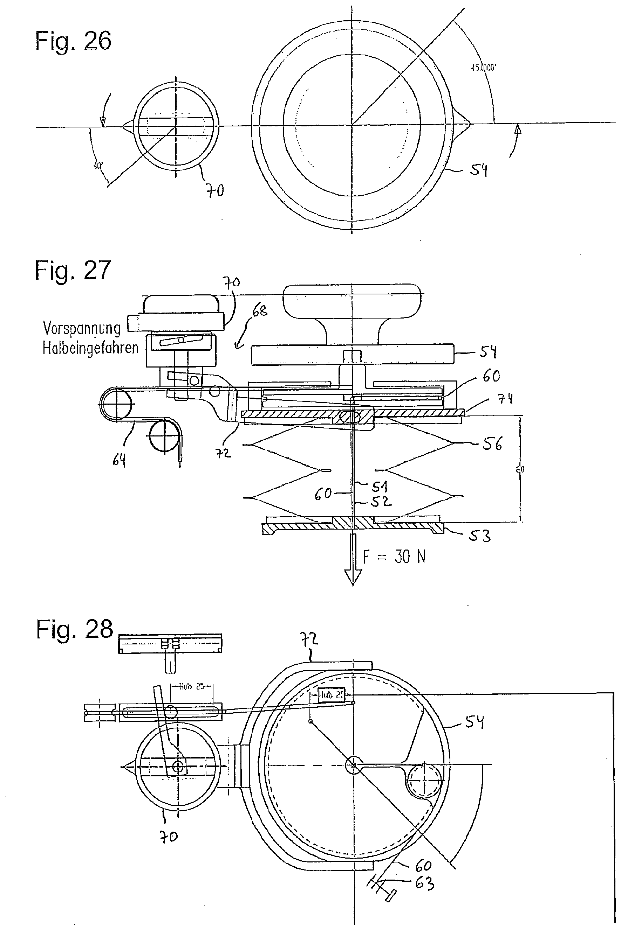

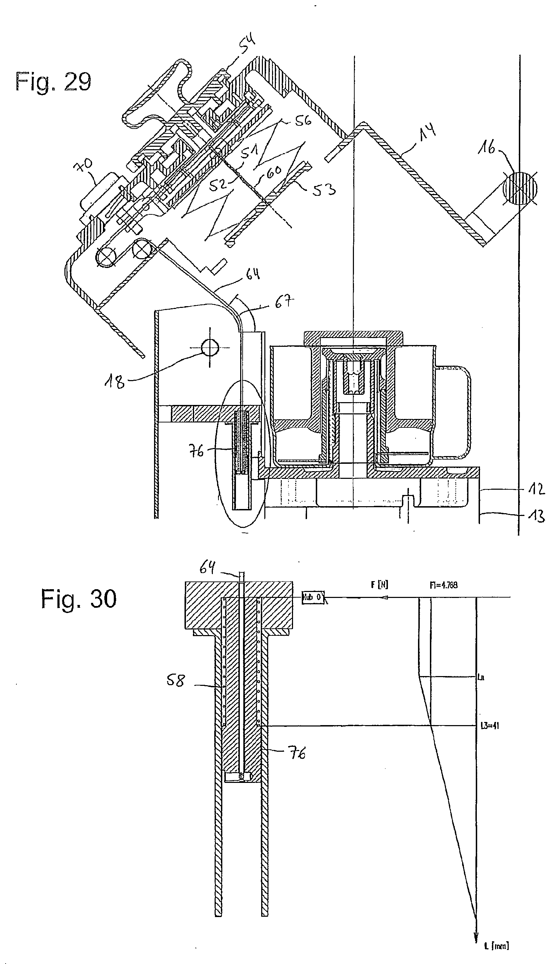

Bezug nehmend auf Fig. 26 bis 30 weist die Messermühle 10 einen Rückholmechanismus auf, welcher das Federelement 56 wieder spannen kann. Hierzu ist ein zweites Seil 64, exzentrisch an dem Drehknopf 54 befestigt und bewirkt die Rückholung des Federelements 56 in die Nullstellung, indem das zweite Seil 64 über den Drehknopf 54 dem Federelement 56 entgegen wirkt. Beim Aufschwenken des Umgehäusedeckels 14 wird das zweite Seil 64 entlang einer Rückholkurve 67 um das Deckelscharnier 18 gewickelt, wodurch das Federelement 56 mittels der Seilzugeinrichtung 52, genauer mittels des ersten Seils 60, vermittelt über den Drehknopf 54 automatisch wieder gespannt wird. Hierbei wirkt das anschlagende Endstück 76 des zweiten Seils 64 als Gegenlager für das automatische Spannen des Federelements 56 mittels der Federspanneinrichtung 51. Im Betrieb wird das zweite Seil 64 in den verschiedenen Stellungen des Federelements mittels einer Seilstrafferfeder 58 gestrafft. Der Rückholmechanismus bewirkt außerdem auch eine automatische Rückholung des Federkraftverstärkers 68 in dessen Nullstellung.

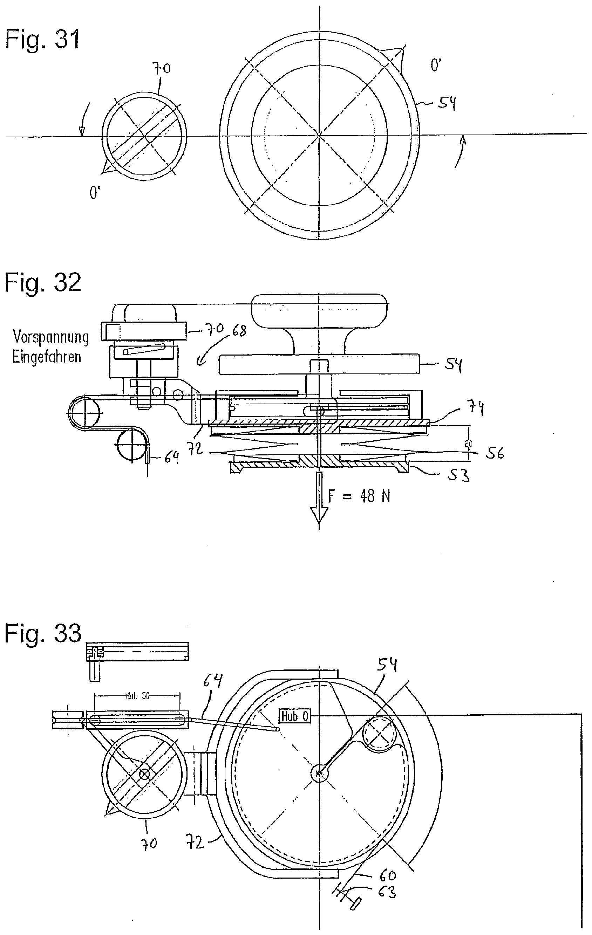

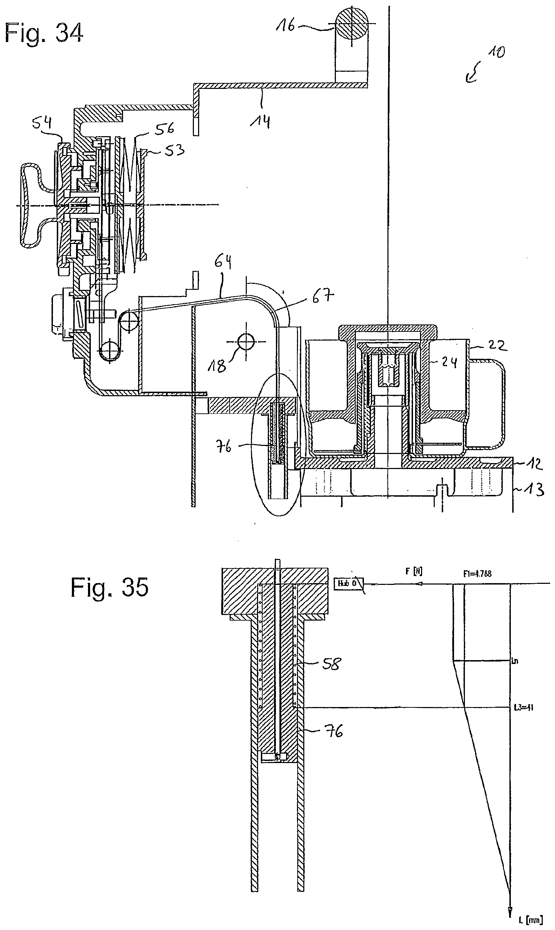

Fig. 31 bis 35 zeigen die Messermühle 10 mit vollständig ausgeschwenktem Umgehäusedeckel 14, was die automatische Rückholung des Federelements 56 in die vollständig gespannte und verriegelte Nullstellung sowie die Rückholung des Federkraftverstärkers 68 in dessen Nullstellung bewirkt hat.

Ferner löst sich die untere zentrale Druckplatte 53 beim Aufschwenken des Gehäusedeckels 14 von dem Komprimierer 24 und klappt mitsamt dem zentral an der Innenseite des Umgehäusedeckels 14 befestigten Federelements 56 von dem Komprimierer 24 weg. Anschließend kann der Komprimierer 24 wieder aus den Zerkleinerungsbehälter 22 herausgezogen oder der Zerkleinerungsbehälter 22 mit dem Komprimierer 24 aus der Messermühle 10 entnommen werden.

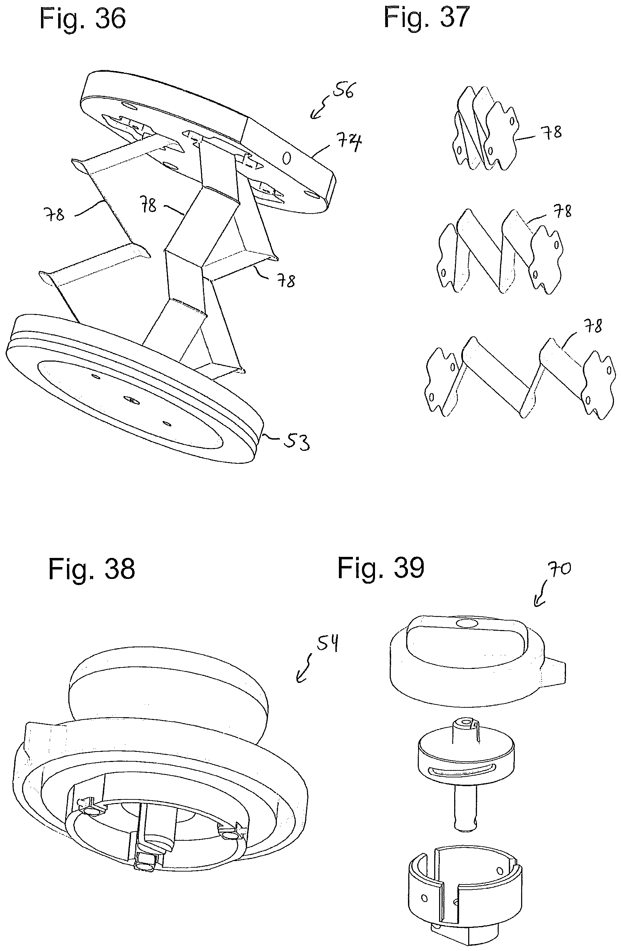

Die Fig. 36 bis 39 zeigen Details des Federelements 56, dessen Blattfedern 78, des Stellgliedes 54 und des Kraftverstärker-Stellgliedes 70.

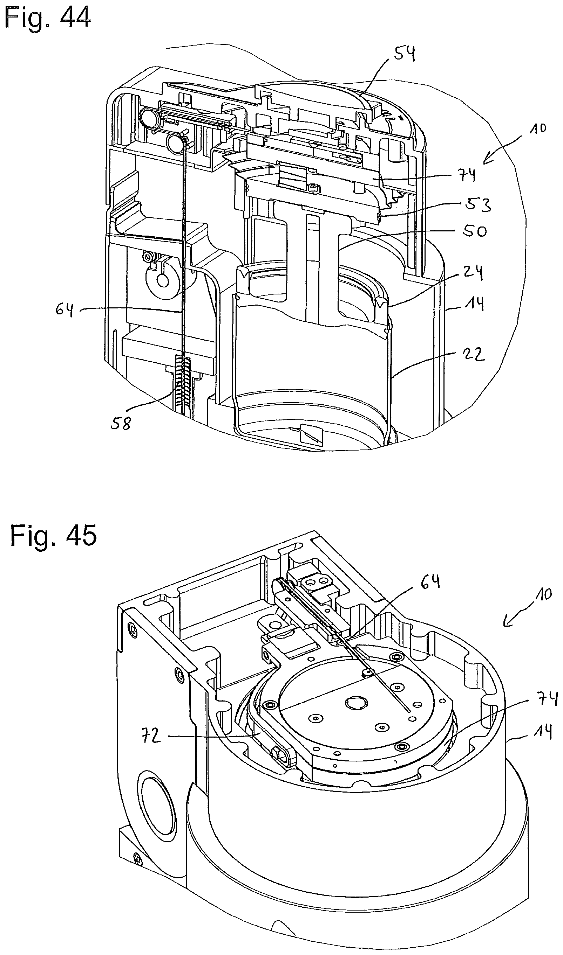

Bezug nehmend auf die Fig. 40 bis 51 ist die Messermühle 10 gemäß einer weiteren Ausführungsform der Erfindung dargestellt.

Bezug nehmend auf Fig. 40 weist das Stellglied 54 neben der Nullstellung 80 eine erste und zweite Zwischenstellung, 82, 84 sowie die untere Endstellung 86 auf, welche entsprechend auf dem Umgehäusedeckel 14 der Messermühle 10 markiert sind.

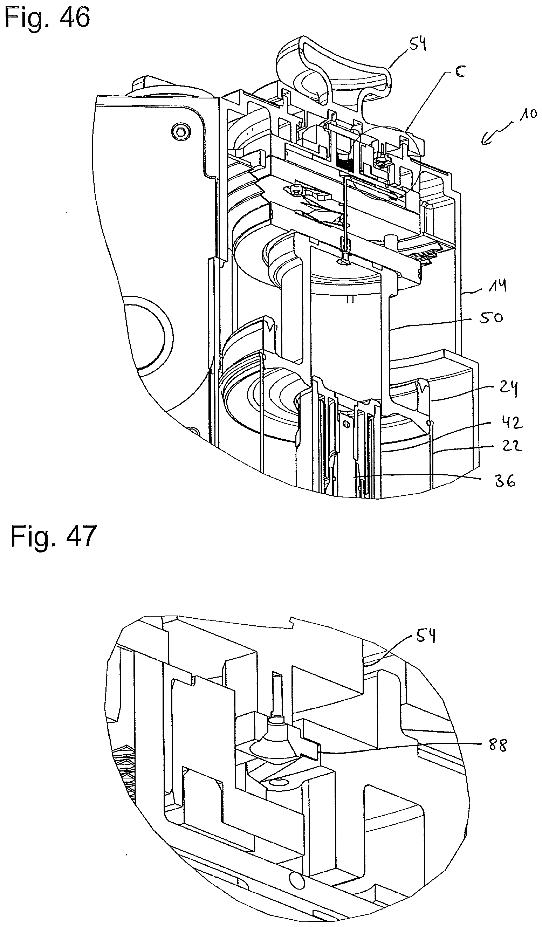

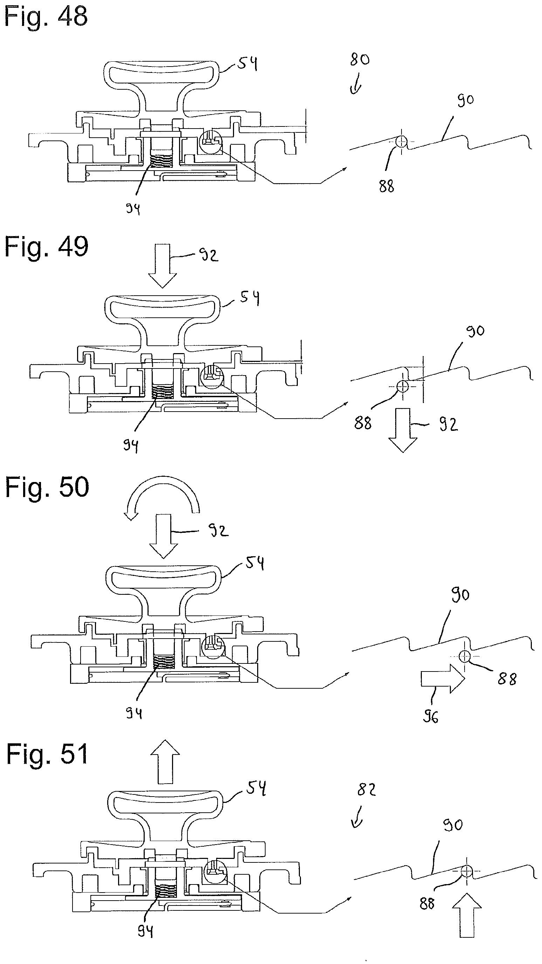

Insbesondere Bezug nehmend auf die Fig. 46 bis 51 ist das Stellglied 54 in den verschiedenen Stellungen 80, 82, 84, 86 mittels eines Raststiftes 88 in einer Sägezahnstruktur 90 verrastet. Zum Einstellen der jeweils gewünschten Stellung 80, 82, 84 oder 86 drückt der Benutzer mit der Hand das Stellglied 54 entlang des Pfeils 92 nach unten, wodurch die Verrastung zwischen dem Raststift 88 und der Sägezahnstruktur 90 gelöst wird. Bezug nehmend auf Fig. 50 kann der Benutzer in diesem entrasteten Zustand das Stellglied 54 in die gewünschte Stellung drehen. Bei vertikaler Entlastung des Stellgliedes 54 von einer Stellgliedfeder 94 wieder nach oben in die verrastete Stellung gebracht (vgl. Fig. 51). Die Sägezahnstruktur 90 ist dabei so ausgebildet, dass der Raststift 88 bei der automatischen Rückholung des Schubmechanismus 26, zum Beispiel durch Aufschwenken des Umgehäusedeckels 14, ohne Druck auf das Stellglied 54 entgegen dem Pfeil 96 wieder zurück in die in Fig. 48 dargestellte Nullstellung 80 gleiten kann.

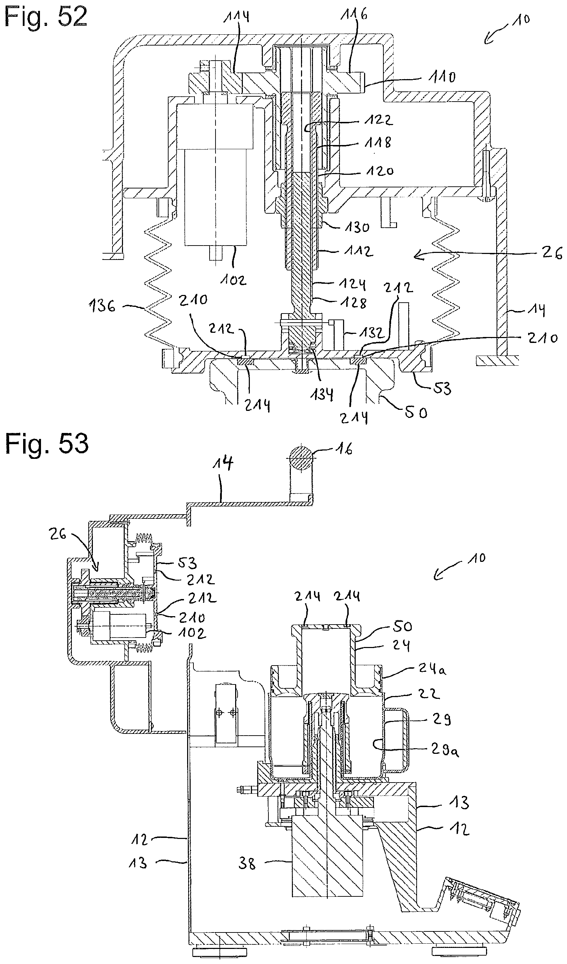

Bezug nehmend auf die Fig. 52 bis 57 ist eine weitere Ausführungsform der Messermühle 10 mit einem Motor 102 für den Komprimierer 24 dargestellt. Der Motor 102 für den Komprimierer 24 ist im geschlossenen Zustand des Umgehäuses 12 oberhalb des Zerkleinerungsbehälters 22 und des Komprimierers 24 angeordnet. Hierzu ist der Motor 102 für den Komprimierer 24 in dem aufschwenkbaren Umgehäusedeckel 14 befestigt. Der Motor 102 für den Komprimierer 24 treibt ein Getriebe 110 an, welches eine Teleskopspindel 112 umfasst. Der Motor 102 treibt dabei mit einem Ritzel 114 ein Zahnrad 116 mit Führungshülse an, in welchem eine erste Spindel 118 mit einem Außensechskant und rechtsgängigem Außengewinde 120 erstreckt. Die Sechskantführung der ersten Spindel 118 in dem Zahnrad 116 mit Führungshülse ist in bekannter Weise mit so genanntem "surface drive" ausgebildet, um ein Verklemmen dieser Linearführung zu verhindern. Die erste Spindel 118 weist ferner ein linksgängiges Innengewinde 122 auf, welches mit einem linksgängigen Außengewinde 124, einer zweiten Spindel 128 zusammenwirkt. Die erste Spindel 118 ist ferner in einer Spindelmutter 130 mit rechtsgängigem Innengewinde geführt. Mit dieser Teleskopspindel 112 kann der Hub innerhalb des begrenzten Raumes des Umgehäusedeckels 14 verdoppelt werden, sodass ein Hub von 2 x 40mm = 80mm erreicht wird.

An der ersten zentralen Druckplatte 53 ist ein analoger Hallsensor 132 angebracht, welcher den relativen Weg der Teleskopspindel 112 gegenüber der ersten zentralen Druckplatte 53 bei Kompression einer Wellenfeder 134 bestimmt. Somit kann über die Anordnung aus Hallsensor 132 und Wellenfeder 134 die Schubkraft F bestimmt werden, welche die erste zentrale Druckplatte 53 auf den zentralen Druckstempel 50 des Komprimierers 24 ausübt.

Ein Faltenbalg 136 umschließt den Motor 102, das Getriebe 110 mit Teleskopspindel 112 sowie weitere Teile des Schubmechanismus 26, sodass diese vor Verunreinigungen geschützt sind. Ferner wirkt der Faltenbalg 136 als Verdrehsicherung der ersten zentralen Druckplatte 53.

Bezug nehmend auf die Fig. 53 bis 57 weist die Messermühle 10 eine Halteeinrichtung 210 auf, mittels welcher der zentrale Druckstempel 50 des Komprimierers 24 an der ersten zentralen Druckplatte 53 mit überwindbarer Haltekraft befestigt ist. In diesem Beispiel sind Magnetelemente 212 an der Unterseite in die erste zentrale Druckplatte 53 eingelassen, welche mit Magnetelementen 214 zusammenwirken, welche in der Oberseite des zentralen Druckstempels 50 eingelassen sind. Beim Schließen des Umgehäusedeckels 14 schnappen die Magnetelemente 212 und 214 zusammen, sodass der Komprimierer 24 an dem ersten zentralen Druckstempel 53 lösbar aufgehängt ist.

Wie in Fig. 53 zu erkennen ist, wirkt in der oberen Grundstellung des Komprimierers 24 zwischen dessen äußerem Rand 24a und der Innenseite 29a der äußeren Ringwandung 29 des Zerkleinerungsbehälters 22 eine hinreichende Haftreibung, sodass in diesem Beispiel der Komprimierer 24 bereits ohne Kraftschluss der magnetischen Halteeinrichtung 210 nicht selbstständig in den Zerkleinerungsbehälter 22 einsinken kann. Dies ist allerdings optional, da der Komprimierer 24 auch von der Halteeinrichtung 210 festgehalten wird, wenn der Magnetschluss erfolgt ist.

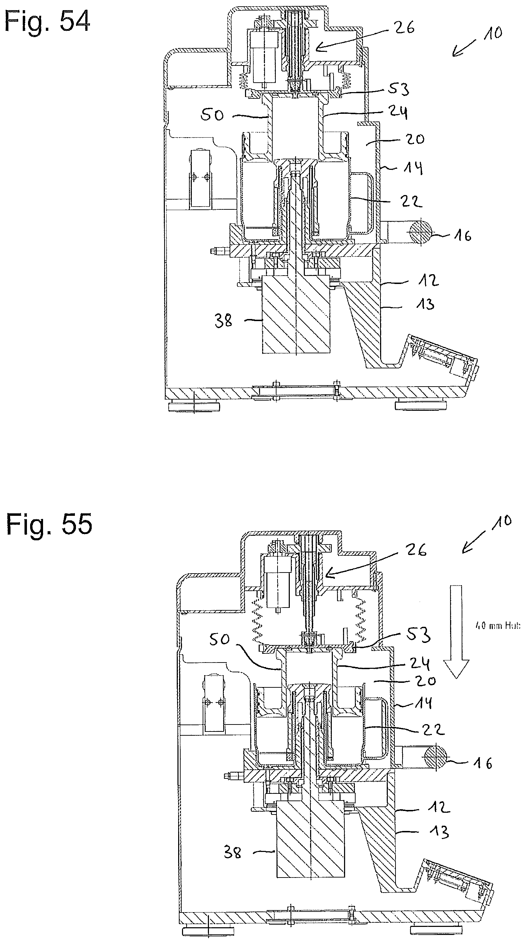

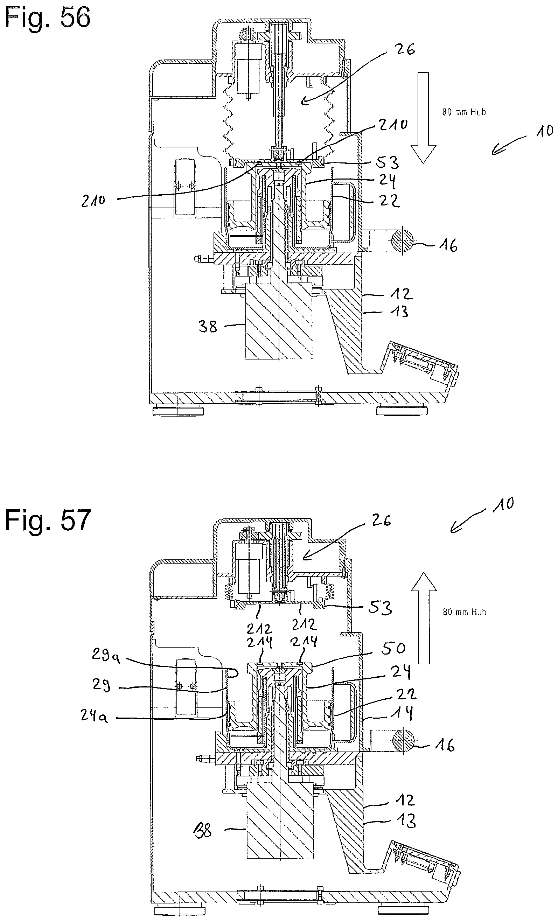

Bezug nehmend auf die Fig. 55 und 56 wird der Komprimierer 22 kontinuierlich oder stufenweise in den Zerkleinerungsbehälter 22 eingeschoben, wobei die Fig. 55 eine Zwischenstellung bei 40mm Hub und die Fig. 56 die untere Endstellung bei 80mm Hub zeigt.

Bezug nehmend auf Fig. 57 wird der Schubmechanismus 26 von der unteren Endstellung wieder in die obere Nullstellung zurückgefahren. Die Haftreibung zwischen der Innenseite 29a der äußeren Ringwandung 29 und dem äußeren Rand 24a des Komprimierers 24 ist zum Beispiel mittels einer Moosgummidichtung 216 so groß eingestellt, dass im Verhältnis hierzu die Magnetkraft der Haltereinrichtung 210 um soviel kleiner eingestellt ist, dass beim Hochfahren des Schubmechanismus 26 die Haltekraft überwunden wird und die untere zentrale Druckplatte 53 automatisch von dem zentralen Druckstempel 50 abreißt. Anschließend kann der Umgehäusedeckel 14 geöffnet und der Zerkleinerungsbehälter 22 mit dem eingeschobenen Komprimierer 24 entnommen werden. Alternativ reißt die magnetische Haltereinrichtung 210 auch dann ab, wenn in der unteren Endstellung 86 des Schubmechanismus 26 der Umgehäusedeckel 14 aufgeschwenkt wird.

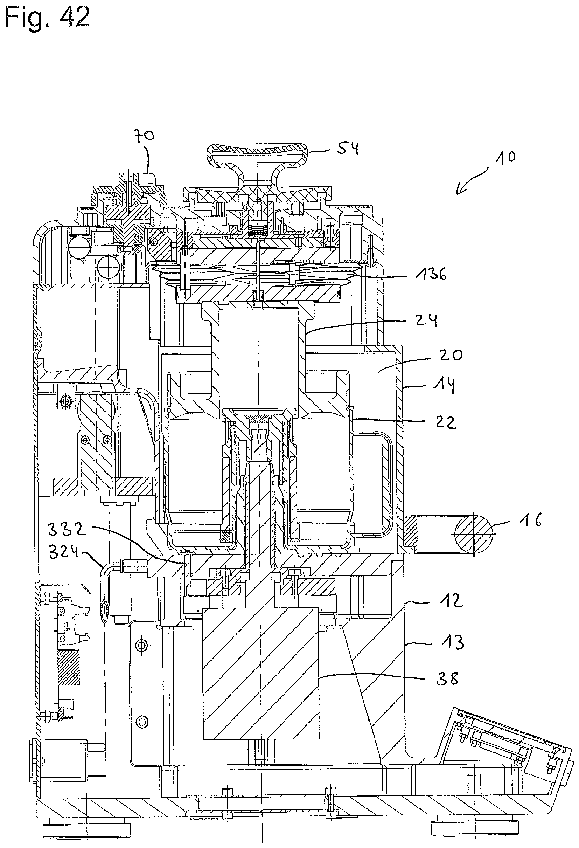

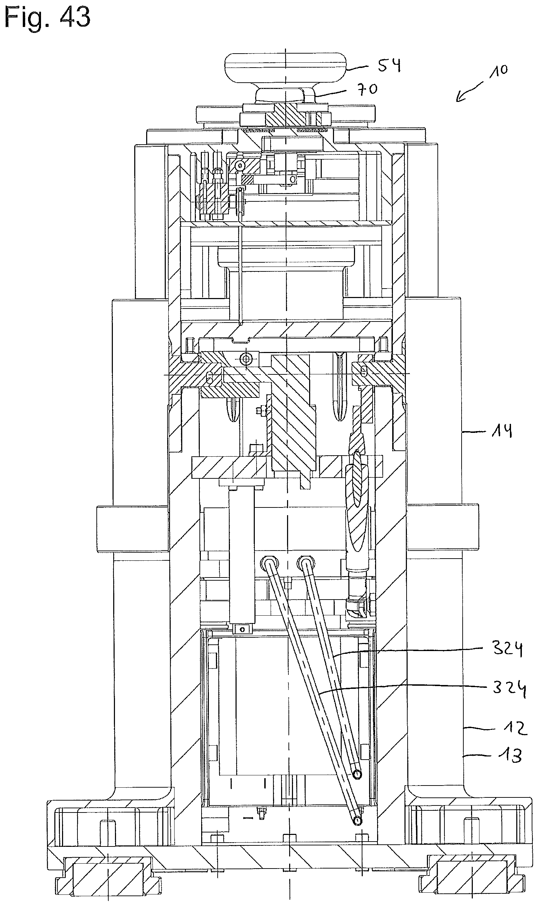

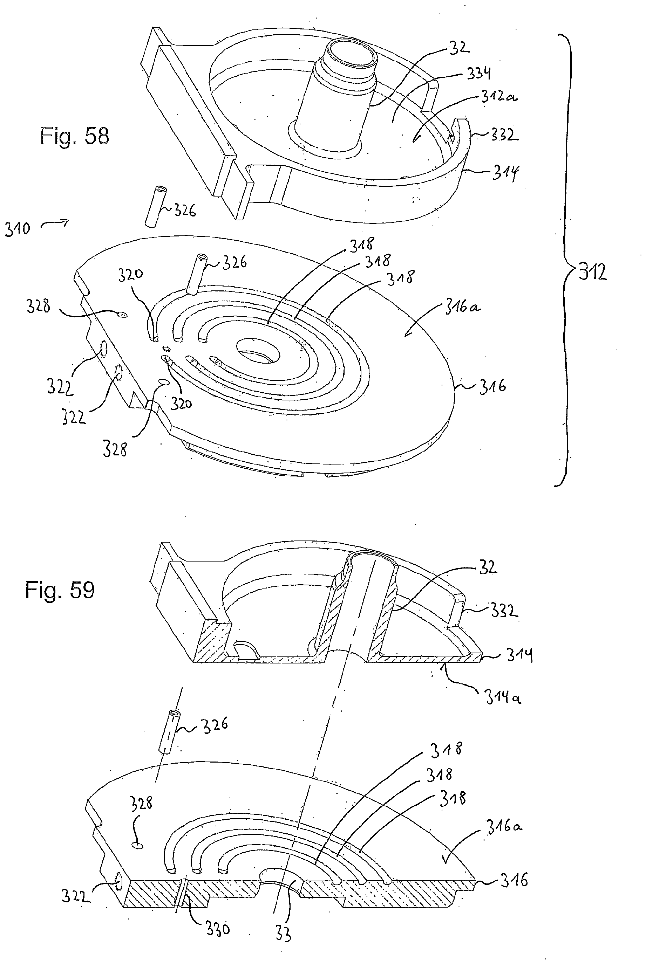

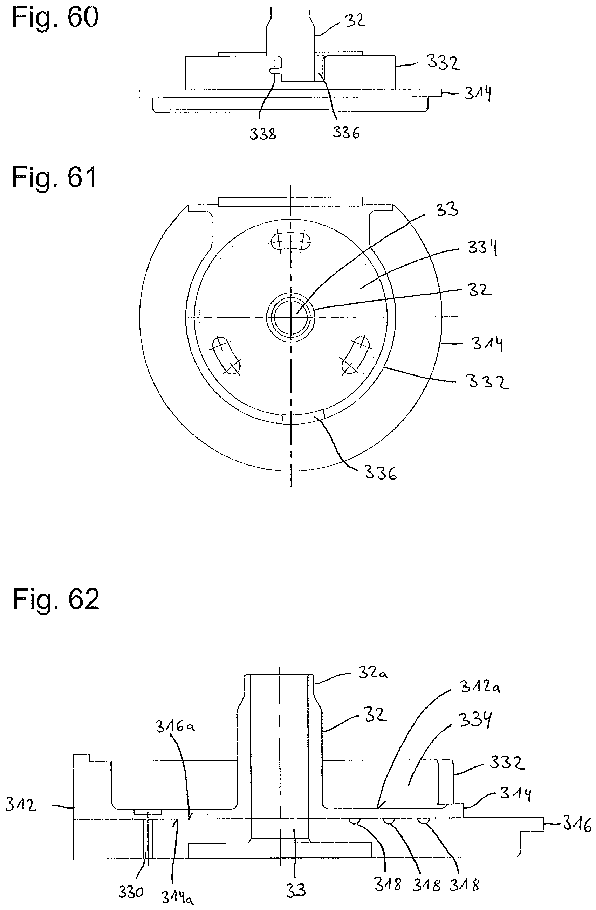

Bezug nehmend auf die Fig. 58 bis 62 weist die Messermühle 10 eine Kühleinrichtung 310 auf. Die Kühleinrichtung 310 umfasst eine Bodenplatte 312 aus Aluminium, welche wiederum aus einer oberen Kühlplatte 314 und einer unteren Kühlplatte 316 besteht. In die Oberseite 316a der unteren Kühlplatte 316 sind ringförmige Kühlkanäle 318 eingefräst, welche sich über Querbohrungen 320 in horizontalen Bohrungen 322 fortsetzen, welche sich in Zu- und Ableitungen 324 für das Kühlfluid fortsetzen (vgl. auch Fig. 42, 43).

Die obere und untere Kühlplatte 314, 316 werden mit Positionierungsstiften 326 in Bohrungen 328 in der Ebene senkrecht zur Antriebswelle 36 positioniert, und anschließend miteinander laserverschweißt. In einer weiteren Bohrung 330 kann ein Temperatursensor 332 (vgl. Fig. 41) eingesetzt werden, um die Temperatur zu überwachen, und diese anzuzeigen, beziehungsweise damit automatisch die Messermühle 10 zu steuern.

Die Bodenplatte 312 weist ferner einen Ringrand 332 auf, welcher mit der oberen Standfläche 312a der Bodenplatte 312 eine Aufnahme 334 für den Zerkleinerungsbehälter 22 bildet, sodass dieser insbesondere radial gut geführt ist. Die Aufnahme 334 beziehungsweise die radiale Führung des Zerkleinerungsbehälters 22 wird weiter ergänzt durch eine sich einstückig von der Bodenplatte 312, beziehungsweise genauer der oberen Kühlplatte 314 nach oben erstreckende Aufnahmehülse 32, über welche die Bodenhülse 34 des Zerkleinerungsbehälters 22 gestülpt wird. Beim Einsetzen des Zerkleinerungsbehälters 22 greift der Handgriff 23 in eine Aussparung 336 in dem Ringrand 332 ein und kann durch leichte Drehung in der Nut 338 arretiert werden.

Der Behälterboden 28 steht im Betrieb der Messermühle 10 auf der Standfläche 312a der Bodenplatte 312 auf, wodurch ein guter Wärmekontakt zum Abführen der Wärme gegeben ist, was zusätzlich noch durch das Zusammenwirken der Aufnahmehülse 32 und der Bodenhülse 34 sowie des Ringrandes 332 und der äußeren Ringwandung 29 des Zerkleinerungsbehälters 22 unterstützt wird.

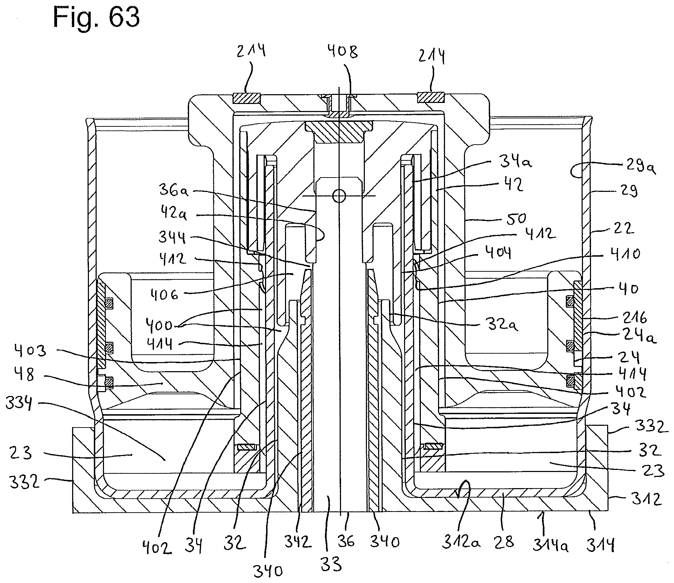

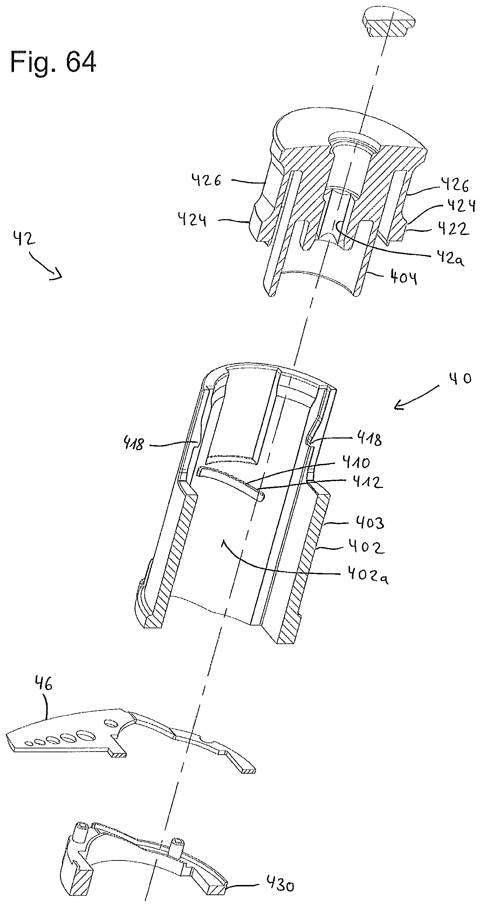

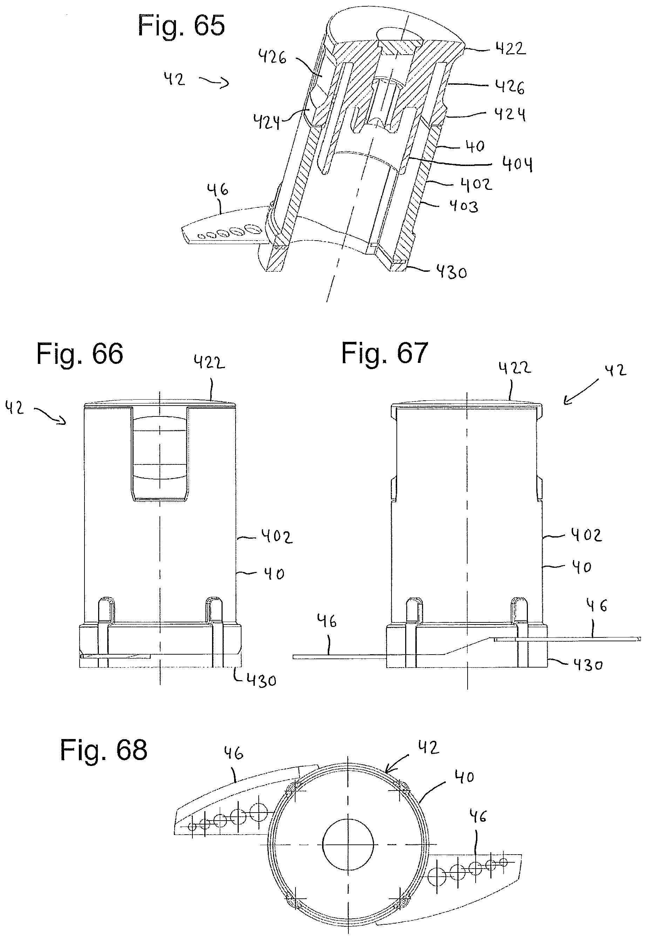

Bezug nehmend auf die Fig. 63 bis 72 werden weitere Details eines verbesserten Messers 42 sowie einer verbesserten Abdichtung zwischen dem Zerkleinerungsbehälter 22 und der Antriebswelle 36 erläutert.

Die Antriebswelle 36 erstreckt sich als Motorwelle aus dem in dem Grundgehäuse 13 beherbergten Antriebsmotor 38 (vgl. Fig. 53 bis 57) durch eine zentrale Öffnung 33 in der Bodenplatte 312, wobei sich die zentrale Öffnung 33 innerhalb der Aufnahmehülse 32 nach oben fortsetzt. Innerhalb der Aufnahmehülse 32 erstreckt sich noch eine Wellenführungshülse 340, in welcher die Antriebswelle 36 unmittelbar geführt wird und welche dem Antriebsmotor 38 zuzuordnen ist. Kritisch für das Eindringen von Flüssigkeit, welche gegebenenfalls aus dem Zerkleinerungsgut austreten könnte, in den Bereich der Motorwelle 36 bzw. in den Bereich des Antriebsmotors 38, sind somit der Ringspalt 342 zwischen der Wellenführungshülse 340 und der Aufnahmehülse 32 und der Ringspalt 344 zwischen dem oberen Ende der Wellenführungshülse 340 und dem Innenmehrkant 42a des Messers 42, welcher über den Außenmehrkant 36a der Antriebswelle 36 gestülpt ist, um das Messer 42 anzutreiben. Bei der vorliegenden Konstruktion sind jedoch der Ringspalt 342 und der Ringspalt 344, welche genügend Spiel für das rotierende Messer 42 bereit stellen, durch mehrere Maßnahmen vor dem Eindringen von Flüssigkeit geschützt.

Der äußere Klingelhaltermantel 402 des hülsenförmigen Klingenhalters 40 ist konzentrisch über die Bodenhülse 34 gestülpt, wobei der obere Abschnitt 34a der Bodenhülse 34 ringförmig konzentrisch zwischen den äußeren Klingenhaltermantel 402, welcher eine äußere umlaufende Ringwand 403 bildet, und einer inneren umlaufenden Ringwand 404 erstreckt, wodurch eine Labyrinthdichtung gebildet wird. Die Labyrinthdichtung ist hierbei jedoch noch weiter nach innen fortgesetzt, sodass eine Doppellabyrinthdichtung 400 gebildet wird, indem die innere Ringwand 404 des hülsenförmigen Klingenhalters 40 konzentrisch von außen über den verjüngten oberen Bereich 32a der Aufnahmehülse 32 gestülpt ist. Eventuell nach innen eintretende Flüssigkeit müsste somit zunächst zwischen dem äußeren Klingenhaltermantel 402 und der Bodenhülse 34 aufsteigen, anschließend zwischen der Bodenhülse 34 und der inneren Ringwand 404 wieder absteigen und anschließend zwischen der inneren Ringwand 404 und dem verjüngten Bereich 32a der Aufnahmehülse 32 wieder nach oben steigen, demnach also die derart gebildete Doppellabyrinthdichtung 400 überwinden. Selbst wenn Flüssigkeit diese Doppellabyrinthdichtung 400 überwinden würde und in den Innenraum 406 der inneren Ringwand 404 des hülsenförmigen Klingenhalters 40 eindringen würde, sorgt die Wellenführungshülse 340 dafür, dass die Antriebswelle 36 trotzdem gut geschützt ist. Allerdings sorgt bereits die beschriebene Doppellabyrinthdichtung 400 dafür, dass selbst wenn Flüssigkeit in den Ringraum zwischen der Bodenhülse 34 und der inneren Ringwand 404 eindringt, diese normalerweise erst gar nicht in den ringförmigen Innenraum 406 gelangt, sondern außen an der Aufnahmehülse 32 abfließt und allenfalls bis auf die Bodenplatte 312 unter den Zerkleinerungsbehälter 22 gelangt. Somit verhindert insbesondere die sich einstückig von der Bodenplatte 312 nach oben erstreckende Aufnahmehülse 32 in Kombination mit der Wellenführungshülse 340 und der Bodenhülse 34, dass Flüssigkeit an die Antriebswelle 36 beziehungsweise in den Bereich des Antriebsmotors 38 im Grundgehäuse 13 gelangen kann.

Das Messer 42 weist allerdings noch weitere Maßnahmen auf, um das Eindringen von Flüssigkeit in den zentralen Bereich der Messermühle 10 zu verhindern, nämlich eine Ventilationseinrichtung 410 innerhalb des hülsenförmigen Klingenhalters 40. Die Ventilationseinrichtung 410 besteht in diesem Beispiel aus Ventilationsflügeln 412, welche einstückig mit dem äußeren ringförmigen Klingenhaltermantel 402 an dessen inneren Umfang 402a angespritzt sind. Bei Rotation des Messers 42 erzeugen die schraubenartig umlaufenden Ventilationsflügel 412 in einem ringförmigen Spalt 414 der Labyrinthdichtung eine Luftströmung von oben nach unten und damit einen Überdruck in Richtung des ringförmigen Arbeitsraumes 23 in dem Zerkleinerungsbehälter 22. Der Komprimierer 24 weist ferner ein Überdruckventil 408 auf, in diesem Beispiel in dem zentralen Druckstempel 50 auf. Dadurch kann der Überdruck durch das Überdruckventil 408 trotz des mittels der äußeren Ringdichtung 216 des Komprimierers 24 gut abgedichteten Arbeitsraums 23 aus dem Zerkleinerungsbehälter 22 austreten, wodurch eine kontinuierliche Luftströmung durch die Labyrinthdichtung zwischen dem Messer 42 und der Bodenhülse 34 erzeugt wird. Erste Messungen mit dem als Ausführungsbeispiel dargestellten Messer 42 in der drehzahlgeregelten Messermühle 10 haben ergeben, dass der folgende Überdruck mit dem Ventilationsflügel 412 erzeugt werden kann:
0,097 mbar bei 3.000 1/min,
0,34 mbar bei 6.000 1/min,
1,1 mbar bei 10.000 1/min, und
2,1 mbar bei 14.000 1/min.

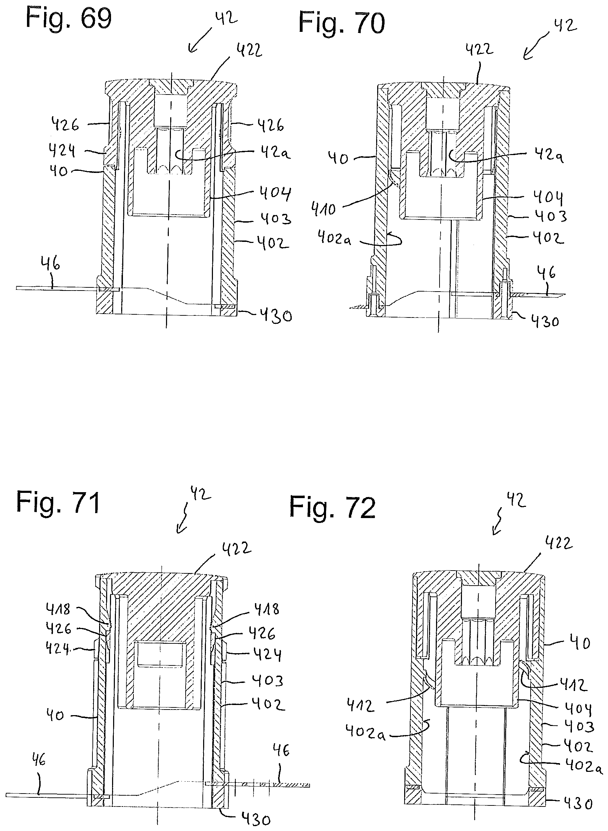

Das Messer 42 weist ferner einen zweigeteilten hülsenförmigen Klingenhalter 40 auf, welcher den äußeren Klingenhaltermantel 402 und einen Klingenhalterdeckel 422 umfasst. Die innere Ringwand 404 ist einstückig mit dem Klingenhalterdeckel 422 aus Kunststoff gespritzt und der Klingenhaltermantel 402 bildet die äußere Ringwand 403. Der Klingenhalterdeckel 422 weist zwei gegenüberliegende Rastlaschen 424 mit Griffmulden 416 auf, wobei Rastnasen 426 an den Rastlaschen 424 mit Rastnasen 418 in dem äußeren Klingenhaltermantel 402 verrastet werden können (vgl. Fig. 71), wobei die Fliehkraft die Rastkraft der Rastlaschen 424 verstärkt. Diese zweiteilige Ausbildung des hülsenförmigen Klingenhalters 40 hat den Vorteil, dass die Ventilationsflügel 412 ggf. ohne Hinterschnitt aus Kunststoff gespritzt werden können und das Messer 42 besser zu reinigen ist. Die metallischen Schneidklingen 46 werden am unteren Ende des äußeren Klingelhaltermantels 402 mittels eines Befestigungsrings 430, welcher mit dem äußeren Klingelhaltermantel 402 verschraubbar ist, befestigt. Dies hat den Vorteil, dass die Klingen 46 ebenfalls separat gereinigt und ausgewechselt werden können.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind. Es ist ersichtlich, dass insbesondere die Merkmale des Schubmechanismus 26, der Halteeinrichtung 210 für den Komprimierer 24, der Kühleinrichtung 310, der Ventilationseinrichtung 410, der Mehrteiligkeit des Messers 42 und der Labyrinthdichtung, bzw. der in der Aufnahmehülse 32 verlaufenden Wellenführungshülse 340 einerseits voneinander unabhängige Erfindungen darstellen können, andererseits aber auch miteinander kombinierbar sind und ggf. zusammenwirken.

## Patentansprüche

1. Messermühle (10), umfassend:
einen Zerkleinerungsbehälter (22) zum Aufnehmen von Zerkleinerungsgut, mit einem Behälterboden (28) und einer äußeren Ringwandung (29),
ein in dem Zerkleinerungsbehälter (22) über dem Behälterboden (28) rotierendes Messer (42),
einen unter dem Behälterboden (28) angeordneten Antriebsmotor (38) zum Antreiben des Messers (42),
einen in dem Zerkleinerungsbehälter (22) verschiebbaren Komprimierer (24) zum Komprimieren des Zerkleinerungsgutes in dem Zerkleinerungsbehälter (22), indem der Komprimierer (24) auf das Messer (42) zu in den Zerkleinerungsbehälter (22) eingeschoben wird, um den Abstand zwischen dem Komprimierer (24) und dem Messer (42) zu verringern und dabei den von dem Zerkleinerungsgut zwischen dem Komprimierer (24) und dem Messer (42) eingenommenen Arbeitsraum (44) zu verkleinern, und
ein Schubmechanismus (26), welcher den Komprimierer (24) auf das Messer (42) zu in den Zerkleinerungsbehälter (22) einschiebt, indem der Komprimierer (24) von dem Schubmechanismus (26) mit einer vordefinierten Schubkraft (F) beaufschlagt wird.

2. Messermühle (10) nach Anspruch 1,
wobei ein Umgehäuse (12) umfasst ist, in welchem zumindest der Zerkleinerungsbehälter (22), der Komprimierer (24) und zumindest teilweise der Schubmechanismus (26) untergebracht ist.

3. Messermühle (10) nach Anspruch 2,
wobei sich der Schubmechanismus (26) gegen das Umgehäuse (12) abstützt, um ein Gegenlager für den Schubmechanismus (26) zu bilden und den Komprimierer (24) mit der Schubkraft (F) beaufschlagen zu können.

4. Messermühle (10) nach einem der vorstehenden Ansprüche,
wobei ein vom Benutzer betätigbares Stellglied (54) umfasst ist und der Schubmechanismus (26) durch Betätigung des Stellgliedes (54) durch den Benutzer die Beaufschlagung des Komprimierers (24) mit der Schubkraft (F) vor, während und/oder nach Beginn des Zerkleinerungsprozesses ausgelöst werden kann.

5. Messermühle (10) nach einem der vorstehenden Ansprüche,
wobei der Schubmechanismus (26) eine obere Nullstellung definiert und zumindest zwei weitere verschiedene vom Benutzer auswählbare Stellungen aufweist, nämlich zumindest eine Zwischenstellung und eine untere Endstellung, in welcher je nach Einstellung des Stellgliedes (54) durch den Benutzer das Einschieben des Komprimierers (24) in den Zerkleinerungsbehälter (22) endet, wobei der Komprimierer (24) in der unteren Endstellung tiefer in den Zerkleinerungsbehälter (22) eingeschoben ist als in der Zwischenstellung.

6. Messermühle (10) nach einem der vorstehenden Ansprüche,
wobei der Komprimierer (24) eine Schneidklingen (46) des Messers (42) zugewandte und auf das Zerkleinerungsgut wirkende Kompressionsscheibe (48) und einen zentralen Druckstempel (50) umfasst, und
wobei der Schubmechanismus an seiner dem Komprimierer (24) zugewandten ersten Seite eine erste zentrale Druckplatte (53) umfasst und die erste zentrale Druckplatte (53) den zentralen Druckstempel (50) des Komprimierers (24) mit der Schubkraft (F) beaufschlagt.

7. Messermühle (10) nach einem der vorstehenden Ansprüche,
wobei der Schubmechanismus (26) ein Federelement (56) umfasst, welches den Komprimierer (24) mit der Schubkraft (F) in Form von Federkraft beaufschlagt und durch Entspannung des Federelements (56) das Einschieben des Komprimierers (24) in den Zerkleinerungsbehälter (22) bewirkt.

8. Messermühle (10) nach Anspruch 7,
wobei der Schubmechanismus (26) eine Federspanneinrichtung (51) umfasst, derart dass durch Lösen der Federspanneinrichtung die Federkraft des Federelements (56) freigesetzt wird und dadurch die Beaufschlagung des Komprimierers (24) mit der Schubkraft ausgelöst wird.

9. Messermühle (10) nach einem der vorstehenden Ansprüche,
wobei der Schubmechanismus (26) einen Federkraftverstärker (68, 70, 72) mit einem vom Benutzer betätigbaren Kraftverstärker-Stellglied (70) umfasst, mittels welchem durch den Benutzer die Stärke der Schubkraft (F) veränderbar ist.

10. Messermühle (10) nach einem der vorstehenden Ansprüche,
wobei der Komprimierer (24) eine den Schneidklingen (46) des Messers (42) zugewandte und auf das Zerkleinerungsgut wirkende Kompressionsscheibe (48) und einen zentralen Druckstempel (50) umfasst,
wobei das Messer (42) hutartig mit einem hülsenförmigen Klingenhalter (40) ausgebildet ist, an dessen Umfangswand eine oder mehrere Schneidklingen (46) angeordnet sind, und der Zerkleinerungsbehälter (22) im Behälterboden (28) eine zentrale Öffnung aufweist durch welche die Antriebswelle (36) des Antriebsmotors (38) in den hülsenförmigen Klingenhalter (40) hineinragt und mit diesem zum Antreiben des Messers (42) gekoppelt ist, und
wobei der zentrale Druckstempel (50) des Komprimierers (24) hutartig über den hülsenförmigen Klingenhalter (40) stülpbar ist.

11. Messermühle (10) nach einem der vorstehenden Ansprüche,
mit einem aufklappbaren Umgehäuse (12), in welchem eine oder mehrere der folgenden Komponenten untergebracht sind:
der Antriebsmotor (38) der Messermühle (10),
der Zerkleinerungsbehälter (22),
der Komprimierer (24),
das Federelement (56),
die Federspanneinrichtung (51),
die Seilzugeinrichtung (52),
die Seilstrafferfeder (58) der Seilzugeinrichtung (52),
die Hebelmechanik (72) des Federkraftverstärkers.

12. Messermühle (10) nach Anspruch 11,
wobei das aufklappbare Umgehäuse (12) ein auf einem Tisch aufstellbares Grundgehäuse (13) und einen um ein Deckelscharnier (18) schwenkbaren Umgehäusedeckel (14) umfasst, wobei beim Aufschwenken des Umgehäusedeckels (14) das Federelement (56) automatisch gespannt wird und der Schubmechanismus (26) in die obere Nullstellung (80) rückgeholt wird und/oder wobei der Federkraftverstärker (68) automatisch in seine Nullstellung rückgeholt wird.

13. Messermühle (10) nach Anspruch 11 oder 12,
wobei das aufklappbare Umgehäuse (12) ein auf einem Tisch aufstellbares Grundgehäuse (13) und einen um ein Deckelscharnier (18) schwenkbaren Umgehäusedeckel (14) umfasst, wobei eine oder mehrere der folgenden Komponenten an dem Umgehäusedeckel (14) befestigt sind und beim Öffnen des Umgehäusedeckels (14) automatisch mit dem Umgehäusedeckel (14) von dem Zerkleinerungsbehälter (22) und/oder dem Komprimierer (24) weg schwenken:
das Federelement (56),
das Stellglied (54),
das Kraftverstärker-Stellglied (70),
die Hebelmechanik (72) des Federkraftverstärkers,

14. Messermühle (10) nach einem der vorstehenden Ansprüche,
wobei der Schubmechanismus (26) einen Motor (102) für den Komprimierer (24) umfasst, welcher über ein Getriebe (110) den Komprimierer (24) mit der Schubkraft (F) beaufschlagt, um den Komprimierer (24) in den Zerkleinerungsbehälter (22) einzuschieben.

15. Messermühle (10) nach Anspruch 14,
wobei der Motor (102) für den Komprimierer (24) an dem Umgehäusedeckel (14) befestigt ist und mit dem Umgehäusedeckel (14) von dem Zerkleinerungsbehälter (22) wegschwenkt, wenn der Umgehäusedeckel (14) geöffnet wird.

## Claims

1. A knife mill (10) comprising:
a comminution container (22) for receiving material to be comminuted, having a container base (28) and an outer annular wall (29);
a knife (42) rotating in the comminution container (22) above the container base (28);
a drive motor (38) arranged below the container base (28), for driving the knife (42);
a compactor (24) displaceable in the comminution container (22) for compressing the comminuted material in the comminution container (22) by moving the compactor (24) towards the knife (42) into the comminution container (22) so as to reduce the spacing between the compactor (24) and the knife (42) and thereby reduce the working space (44) occupied by the comminuted material between the compactor (24) and the knife (42); and
a pusher mechanism (26) pushing the compactor (24) towards the knife (42) into the comminution container (22) by subjecting the compactor (24) to a predefined thrust force (F) by the pusher mechanism (26).

2. The knife mill (10) according to claim 1,
comprising a housing (12) which accommodates at least the comminution container (22), the compactor (24), and at least partially the pusher mechanism (26).

3. The knife mill (10) according to claim 2,
wherein the pusher mechanism (26) abuts against the housing (12) to provide a counter-bearing for the pusher mechanism (26) and to be able to subject the compactor (24) to the thrust force (F).

4. The knife mill (10) according to any one of the preceding claims,
comprising a control element (54) operable by the user, and wherein the pusher mechanism (26) can be triggered prior to, during, and/or after the start of the comminution process, by actuation of the control element (54) by the user for subjecting the compactor (24) to the thrust force (F).

5. The knife mill (10) according to any one of the preceding claims,
wherein the pusher mechanism (26) defines an upper zero position and has at least two further positions selectable by the user, namely at least one intermediate position, and a lower end position where the moving of the compactor (24) into the comminution container (22) stops, depending on the setting of the control element (54) by the user, wherein in the lower end position the compactor (24) is inserted deeper in the comminution container (22) than in the intermediate position.

6. The knife mill (10) according to any one of the preceding claims,
wherein the compactor (24) comprises a compression disk (48) facing cutting blades (46) of the knife (42) and acting on the comminuted material, and a central pressure ram (50); and
wherein the pusher mechanism comprises a first central pressure plate (53) on its first side facing the compactor (24), and wherein said first central pressure plate (53) subjects the central pressure ram (50) of the compactor (24) to the thrust force (F).

7. The knife mill (10) according to any one of the preceding claims,
wherein the pusher mechanism (26) comprises a spring member (56) which subjects the compactor (24) to the thrust force (F) in the form of a spring force and causes the compactor (24) to be moved into the comminution container (22) through relaxation of the spring member (56).

8. The knife mill (10) according to claim 7,
wherein the pusher mechanism (26) comprises a spring loading means (51) such that by releasing the spring loading means the spring force of the spring member (56) is released thereby initiating the subjecting of the compactor (24) to the thrust force.

9. The knife mill (10) according to any one of the preceding claims,
wherein the pusher mechanism (26) comprises a spring force booster (68, 70, 72) with a booster control element (70) that is operable by the user and allows the user to vary the strength of the thrust force (F).

10. The knife mill (10) according to any one of the preceding claims,
wherein the compactor (24) comprises a compression disk (48) facing the cutting blades (46) of the knife (42) and acting on the comminuted material, and a central pressure ram (50); and
wherein the knife (42) has a hat-like shape including a sleeve-shaped blade holder (40) with one or more cutting blades (46) arranged on a peripheral wall thereof, and wherein the comminution container (22) has a central opening in the container base (28), through which the drive shaft (36) of the drive motor (38) extends into the sleeve-shaped blade holder (40) and is coupled thereto for driving the knife (42); and
wherein the central pressure ram (50) of the compactor (24) can be placed over the sleeve-shaped blade holder (40) like a hat.

11. The knife mill (10) according to any one of the preceding claims,
comprising a hinged housing (12) which accommodates one or more of the following components:
the drive motor (38) of the knife mill (10);
the comminution container (22);
the compactor (24);
the spring member (56);
the spring loading means (51);
the cable pulling means (52);
the cable tensioning spring (58) of the cable pulling means (52);
the lever mechanism (72) of the spring force booster.

12. The knife mill (10) according to claim 11,
wherein the hinged housing (12) comprises a base housing (13) that can be placed on a table, and a housing hood (14) pivotable about a hood hinge (18), wherein, when the housing hood (14) is pivoted open, the spring member (56) is automatically loaded and the pusher mechanism (26) is returned to its upper zero position (80), and/or wherein the spring force booster (68) is automatically returned to its zero position.

13. The knife mill (10) according to claim 11 or 12,
wherein the hinged housing (12) comprises a base housing (13) which can be placed on a table, and a housing hood (14) pivotable about a hood hinge (18), wherein one or more of the following components are fastened to the housing hood (14) and automatically pivot away from the comminution container (22) and/or from the compactor (24) together the with the housing hood (14) when the housing hood (14) is opened:
the spring member (56);
the control element (54);
the booster control element (70);
the lever mechanism (72) of the spring force booster.

14. The knife mill (10) according to any one of the preceding claims,
wherein the pusher mechanism (26) comprises a motor (102) for the compactor (24), which subjects the compactor (24) to the thrust force (F) via a transmission (110), in order to move the compactor (24) into the comminution container (22).

15. The knife mill (10) according to claim 14,
wherein the motor (102) for the compactor (24) is secured to the housing hood (14) and pivots away from the comminution container (22) together with the housing hood (14) when the housing hood (14) is opened.

## Revendications

1. Broyeur à couteau (10) comprenant :
un bac de fragmentation (22) pour recevoir du produit de fragmentation, avec un fond de bac (28) et une paroi annulaire extérieure (29),
un couteau (42) tournant dans le bac de fragmentation (22) au-dessus du fond de bac (28),
un moteur d'entraînement (38) disposé sous le fond de bac (28) pour entraîner le couteau (42),
un compresseur (24) déplaçable dans le bac de fragmentation (22) pour comprimer le produit de fragmentation dans le bac de fragmentation (22) par le fait que le compresseur (24) est enfoncé dans le bac de fragmentation (22) en direction du couteau (42) afin de diminuer l'écartement entre le compresseur (24) et le couteau (42) et de réduire ainsi l'espace de travail (44) compris entre le compresseur (24) et le couteau (42), et
un mécanisme de poussée (26) qui enfonce le compresseur (24) dans le bac de fragmentation (22) en direction du couteau (42) par le fait que le compresseur (24) est sollicité par le mécanisme de poussée (26) avec une force de poussée prédéfinie (F).

2. Broyeur à couteau (10) selon la revendication 1,
un carter d'enveloppe (12) étant prévu, dans lequel sont logés au moins le bac de fragmentation (22), le compresseur (24) et au moins en partie le mécanisme de poussée (26).

3. Broyeur à couteau (10) selon la revendication 2,
le mécanisme de poussée (26) prenant appui contre le carter d'enveloppe (12) afin de former un contre-appui pour le mécanisme de poussée (26) et afin de pouvoir solliciter le compresseur (24) avec la force de poussée (F).

4. Broyeur à couteau (10) selon une des revendications précédentes,
un actionneur (54) actionnable par l'utilisateur étant prévu, et la sollicitation du compresseur (24) avec la force de poussée (F) pouvant être déclenchée par actionnement de l'actionneur (54) par l'utilisateur avant, pendant et/ou après le début du processus de fragmentation.

5. Broyeur à couteau (10) selon une des revendications précédentes,
le mécanisme de poussée (26) définissant une position neutre haute et comportant au moins deux autres positions différentes sélectionnables par l'utilisateur, à savoir au moins une position intermédiaire et une position extrême basse dans laquelle, selon le réglage de l'actionneur (54) par l'utilisateur, l'enfoncement du compresseur (24) dans le bac de fragmentation (22) prend fin, le compresseur (24) étant enfoncé dans le bac de fragmentation (22) plus profondément dans la position extrême basse que dans la position intermédiaire.

6. Broyeur à couteau (10) selon une des revendications précédentes,
le compresseur (24) comportant un disque de compression (48), tourné vers des lames de coupe (46) du couteau (42) et agissant sur le produit de fragmentation, et un poussoir central (50),
le mécanisme de poussée comprenant, sur son premier côté tourné vers le compresseur (24), une première plaque centrale de poussée (53), et la première plaque centrale de poussée (53) sollicitant le poussoir central (50) du compresseur (24) avec la force de poussée (F).

7. Broyeur à couteau (10) selon une des revendications précédentes,
le mécanisme de poussée (26) comportant un élément élastique (56) qui sollicite le compresseur (24) avec la force de poussée (F) en forme de force élastique et, par détente de l'élément élastique (56), provoque l'enfoncement du compresseur (24) dans le bac de fragmentation (22).

8. Broyeur à couteau (10) selon la revendication 7,
le mécanisme de poussée (26) comprenant un équipement de serrage élastique (51), de façon que, lors du relâchement de l'équipement de serrage élastique, la force élastique de l'élément élastique (56) soit libérée et la sollicitation du compresseur (24) avec la force de poussée soit ainsi déclenchée.

9. Broyeur à couteau (10) selon une des revendications précédentes,
le mécanisme de poussée (26) comportant un amplificateur de force élastique (68, 70, 72) avec un actionneur d'amplificateur de force (70) actionnable par l'utilisateur, au moyen duquel l'intensité de la force de poussée (F) est modifiable par l'utilisateur.

10. Broyeur à couteau (10) selon une des revendications précédentes,
le compresseur (24) comportant un disque de compression (48), tourné vers les lames de coupe (46) du couteau (42) et agissant sur le produit de fragmentation, et un poussoir central (50),
le couteau (42) étant conformé en chapeau avec un porte-lames formant manchon (40) sur la paroi périphérique duquel sont disposées une ou plusieurs lames de coupe (46), et le bac de fragmentation (22) comportant dans le fond de bac (28) une ouverture centrale par laquelle l'arbre d'entraînement (36) du moteur d'entraînement (38) pénètre dans le porte-lames formant manchon (40) et est couplé à celui-ci pour entraîner le couteau (42), et
le poussoir central (50) du compresseur (24) pouvant être enfilé à la façon d'un chapeau sur le porte-lames formant manchon (40).

11. Broyeur à couteau (10) selon une des revendications précédentes,
comprenant un carter d'enveloppe relevable (12) dans lequel un ou plusieurs des composants suivants sont logés :
le moteur d'entraînement (38) du broyeur à couteau (10),
le bac de fragmentation (22),
le compresseur (24),
l'élément élastique (56),
l'équipement de serrage élastique (51)
l'équipement de traction par câble (52)
le ressort de tension de câble (58) de l'équipement de traction par câble (52),
le mécanisme à levier (72) de l'amplificateur de force élastique.

12. Broyeur à couteau (10) selon la revendication 11,
le carter d'enveloppe relevable (12) comprenant un carter de base (13) à poser sur une table et un couvercle de carter d'enveloppe (14) apte à pivoter autour d'une charnière de couvercle (18), lors du relevage du couvercle de carter d'enveloppe (14) l'élément élastique (56) étant automatiquement mis en tension et le mécanisme de poussée (26) étant rappelé dans la position neutre haute (80) et/ou l'amplificateur de force élastique (68) étant rappelé automatiquement dans sa position neutre.

13. Broyeur à couteau (10) selon la revendication 11 ou 12,
le carter d'enveloppe relevable (12) comprenant un couvercle de carter d'enveloppe (13) à poser sur une table et un couvercle de carter d'enveloppe (14) apte à pivoter autour d'une charnière de couvercle (18), un ou plusieurs des composants suivants étant fixés au couvercle de carter d'enveloppe (14) et, lors de l'ouverture du couvercle de carter d'enveloppe (14), pivotant automatiquement avec le couvercle de carter d'enveloppe (14) en s'éloignant du bac de fragmentation (22) et/ou du compresseur (24) :
l'élément élastique (56),
l'actionneur (54),
l'actionneur d'amplificateur de force (70),
le mécanisme à levier (72) de l'amplificateur de force élastique.

14. Broyeur à couteau (10) selon une des revendications précédentes,
le mécanisme de poussée (26) comprenant, pour le compresseur (24), un moteur (102) qui, par l'intermédiaire d'une transmission (110), sollicite le compresseur (24) avec la force de poussée (F) afin d'enfoncer le compresseur (24) dans le bac de fragmentation (22).

15. Broyeur à couteau (10) selon la revendication 14,
le moteur (102) pour le compresseur (24) étant fixé au couvercle de carter d'enveloppe (14) et pivotant avec le couvercle de carter d'enveloppe (14) en s'éloignant du bac de fragmentation (22) lorsque le couvercle de carter d'enveloppe (14) est ouvert.
